# EUROPÄISCHE PATENTANMELDUNG

(11) **EP 4 711 202 A1**
(43) Veröffentlichungstag der Anmeldung: **18.03.2026**
(21) Anmeldenummer: 25201036.8
(22) Anmeldetag: 09.09.2025
(51) Int. Cl.: B60P 7/15

(54) **SPERRBALKEN ZUR LADUNGSSICHERUNG**

(30) Priorität: 10.09.2024 DE 102024125979
(71) Anmelder: PWP SA, 1530 Payerne (CH)
(72) Erfinder: SUER, Arne, 42859 Remscheid (DE)
(74) Vertreter: Rieder & Partner mbB Patentanwälte - Rechtsanwalt

(57) **Zusammenfassung**

Die Erfindung betrifft einen Sperrbalken (1) zur Ladungssicherung, mit an gegenüberliegenden Enden (5, 6) ausgebildeten, im Wesentlichen U-förmigen Klemmaufnahmen, einer ersten Klemmaufnahme (7) und einer zweiten Klemmaufnahme (8), wobei die erste Klemmaufnahme (7) ein erstes, einem U-Schenkel (9) entsprechendes Klemmstück (11) und die zweite Klemmaufnahme (8) ein zweites, einem U-Schenkel (9) entsprechendes Klemmstück (12) aufweist und das erste und das zweite Klemmstück (11, 12) zwischen einer Klemmstellung und einer Freigabestellung mittels eines Klemmhebels (13) bewegbar sind. Um einen vereinfacht zu handhabenden Sperrbalken auszubilden, wird vorgeschlagen, dass der Klemmhebel (13) getriebemäßig mit dem ersten und dem zweiten Klemmstück (11, 12) gekoppelt ist, zur Bewegung des ersten und des zweiten Klemmstücks (11, 12) mittels einer selben Hebelbewegung in die Klemmstellung. Kombinativ oder alternativ hierzu kann vorgesehen sein, dass in einem Querschnitt durch die Klemmfläche (18, 52) parallel zu einer Öffnungsebene (F) der Klemmaufnahme (7, 8) eine Klemmfläche (18, 52) eines ersten und/oder zweiten und/oder dritten und/oder vierten Klemmstücks (11, 12, 49, 50) in Richtung auf die gegenüberliegende Klemmfläche (52, 18) derselben Klemmaufnahme (8, 7) konvex gekrümmt verläuft.

## Beschreibung

### Gebiet der Technik

Die Erfindung betrifft einen Sperrbalken zur Ladungssicherung, mit an gegenüberliegenden Enden ausgebildeten, im Wesentlichen U-förmigen Klemmaufnahmen, einer ersten Klemmaufnahme und einer zweiten Klemmaufnahme, wobei die erste Klemmaufnahme ein erstes, einem U-Schenkel entsprechendes Klemmstück und die zweite Klemmaufnahme ein zweites, einem U-Schenkel entsprechendes Klemmstück aufweist und das erste und das zweite Klemmstück zwischen einer Klemmstellung und einer Freigabestellung mittels eines Klemmhebels bewegbar sind.

### Stand der Technik

Sperrbalken der in Rede stehenden Art sind beispielsweise auch als sogenannte Ladungssicherungsbalken oder Zwischenwandverschlüsse bekannt, so weiter beispielsweise aus der EP 4 122 763 A1. Die Klemmstücke jeder Klemmaufnahme sind jeweils mittels eines unmittelbar der Klemmaufnahme zugeordneten ersten und zweiten Klemmhebels zwischen einer Klemmstellung und einer Freigabestellung bewegbar. Bei einem üblichen Ansetzen des Sperrbalkens durch nur eine Person, bewegt diese Person mittels des ersten Klemmhebels zunächst die eine endseitige Klemmaufnahme in die Klemmstellung und hiernach mittels des zweiten Klemmhebels die Klemmaufnahme des gegenüberliegenden Endes.

### Zusammenfassung der Erfindung

Im Hinblick auf den vorbeschriebenen Stand der Technik stellt sich der Erfindung die Aufgabe, einen vorteilhaft zu handhabenden Sperrbalken auszubilden.

Eine mögliche Lösung der Aufgabe ist nach einem ersten Erfindungsgedanken bei einem Sperrbalken gelöst, bei welchem darauf abgestellt ist, dass der Klemmhebel getriebemäßig mit dem ersten und dem zweiten Klemmstück gekoppelt ist, zur Bewegung des ersten und des zweiten Klemmstücks mittels einer selben Hebelbewegung in die Klemmstellung.

Zufolge der vorgeschlagenen Ausgestaltung ist eine handhabungstechnisch vereinfachte Handhabung des Sperrbalkens erreichbar. Die den Sperrbalken in die Klemmstellung oder aus der Klemmstellung in die Freigabestellung beider Klemmaufnahmen zu verbringende Person braucht zur Betätigung beider Klemmstücke lediglich einen, denselben, Klemmhebel zu betätigen. Mit Betätigung dieses einen Klemmhebels werden durch die getriebemäßige Kopplung die Klemmstücke beider Klemmaufnahmen aus der Freigabestellung in die Klemmstellung oder aus der Klemmstellung in die Freigabestellung bewegt.

Dabei können die Bewegungen beider Klemmstücke zugleich, gleichsam synchron, erfolgen. Auch eine Bewegung beider Klemmstücke nacheinander ist möglich, so dass das Klemmstück der zweiten Klemmaufnahme bei weiterer Betätigung desselben Klemmhebels erst nach Erreichen der Klemmstellung oder zumindest einer Anlagestellung des Klemmstückes der ersten Klemmaufnahme in Richtung auf dessen Klemmstellung bewegt wird.

Die Aufgabe kann nach einem weiteren Erfindungsgedanken bei einem Sperrbalken gelöst sein, bei welchem darauf abgestellt ist, dass in einem Querschnitt durch die Klemmfläche parallel zu einer Öffnungsebene der Klemmaufnahme eine Klemmfläche eines ersten und/oder zweiten und/oder dritten und/oder vierten Klemmstücks in Richtung auf die gegenüberliegende Klemmfläche derselben Klemmaufnahme konvex gekrümmt verläuft.

Diese vorteilhafte Ausgestaltung ist allein für sich betrachtet von Bedeutung, kann entsprechend auch bei Sperrbalken zur Anwendung kommen, bei welchen der Klemmhebel nicht getriebemäßig mit dem ersten und zweiten Klemmstück gekoppelt ist, gegebenenfalls also mehrere, insbesondere zwei, Klemmhebel vorgesehen sind. Aber auch die Ausbildung eines mit einem getriebemäßig mit dem ersten und zweiten Klemmstück gekoppelten Klemmhebel versehenen Sperrbalkens mit konvex gekrümmt verlaufenden Klemmflächen an den Teleskopteilen führt zu einer weiteren Vereinfachung bei der Handhabung des Sperrbalkens.

Zufolge der konvexen Krümmung der Klemmfläche ist eine vereinfachte Handhabung des Sperrbalkens erreichbar. Der Sperrbalken ist nicht zwingend in einer Richtung senkrecht zu beispielsweise dem Querriegel, an welchem die Klemmaufnahme klemmend angreift, auszurichten oder, wenn dies nicht gegeben ist, kann sich keine ungünstige Verkantung einstellen. Vielmehr kann zufolge der gekrümmten Klemmfläche der Sperrbalken auch in einem spitzen Winkel von beispielsweise 10 bis 15 Grad oder mehr, weiter beispielsweise bis hin zu 20 Grad oder mehr, zu der Längsrichtung des Querriegels ausgerichtet und in dieser Stellung durch Klemmung befestigt werden. Durch die aufeinander zu gerichteten balligen Klemmflächen ist stets eine sichere Klemmung des Sperrbalkens erreichbar.

Die einen U-Schenkel der U-förmigen Klemmaufnahme bildenden Klemmstücke können ausgebildet sein beispielsweise zur Zusammenwirkung mit einem Querriegel einer Fahrzeugwand, insbesondere mit einer Fahrzeugwand eines Lastkraftwagen-Aufbaus. Dabei können die Klemmstücke zugleich auch, zumindest teilweise, den U-Steg der U-förmigen Klemmaufnahme bilden, so dass sich in der Klemmstellung eine Abstützung des jeweilige Klemmstücks auf einem solchen Querriegel ergeben kann, während der U-Schenkel des Klemmstücks den Querriegel hintergreifen kann.

Die erste und/oder die zweite Klemmaufnahme können darüber hinaus ein drittes und/oder ein viertes Klemmstück aufweisen, welches drittes und/oder viertes Klemmstück auch jeweils einem zweiten U-Schenkel entsprechen kann. So kann ein mögliches drittes Klemmstück der ersten Klemmaufnahme mit dem ersten Klemmstück zugeordnet vorgesehen sein, wie auch ein mögliches viertes Klemmstück zugeordnet der zweiten Klemmaufnahme mit dem zweiten Klemmstück vorgesehen sein kann. Dabei können das erste und/oder das zweite Klemmstück jeweils einen ersten U-Schenkel der Klemmaufnahme bilden und das zugeordnete dritte und/oder das vierte Klemmstück jeweils den zweiten U-Schenkel derselben Klemmaufnahme.

Das dritte und/oder das vierte Klemmstück können mit dem zugeordneten ersten und/oder zweiten Klemmstück derselben ersten und/oder zweiten Klemmaufnahme mittelbar oder unmittelbar bewegungsgekoppelt sein.

Auch kann der Sperrbalken in einer möglichen Ausgestaltung ein Grundteil und ein oder mehrere relativ zu dem Grundteil in eine Auszieh- oder Einziehstellung bewegbare Teleskopteile aufweisen. Hierdurch ist eine Anpassung des Sperrbalkens in dessen Längserstreckung an die Gegebenheiten - beispielsweise Breite des Lastkraftwagen-Aufbaus beziehungsweise Abstand der über den Sperrbalken miteinander zu verbindenden Querriegel - ermöglicht. Mit einer Verlagerung in Ausziehstellung kann sich eine Längenvergrößerung und mit einer Verlagerung in Einziehstellung eine Längenreduzierung des Sperrbalkens ergeben. Auch kann durch die relative Verlagerbarkeit zumindest eines Teils der Teleskopteile eine Anpassung an eine Dicke des U-förmig zu umfassenden Querriegels erreicht werden.

Das erste und/oder das zweite Klemmstück können an einem ersten beziehungsweise an einem zweiten Teleskopteil angeordnet sein. Die ersten beziehungsweise zweiten Klemmstücke können dabei bevorzugt starr, bewegungsgekoppelt mit dem jeweiligen Teleskopteil verbunden sein. Eine Bewegung des Teleskopteils in Längserstreckung des Sperrbalkens hat eine entsprechende Bewegung des gekoppelten Klemmstücks zur Folge.

Die Bewegung des ersten und/oder des zweiten Klemmstücks in Richtung auf die Klemmstellung kann nach einer möglichen Ausgestaltung das erste und/oder das zweite Teleskopteil in die Einziehstellung bewegen. Die Klemmstellung bevorzugt beider (erster und zweiter) Klemmstücke ist entsprechend durch eine teleskopartige Einwärtsverlagerung der diesbezüglichen Teleskopteile relativ zu dem Grundteil erreichbar, insbesondere unter Nutzung des Klemmhebels. So kann der Klemmhebel dazu ausgelegt sein, die ersten und/oder zweiten Teleskopteile aus einer Ausziehstellung in eine Einziehstellung zu verlagern, womit die ersten und/oder zweiten Klemmstücke in ihre Klemmstellung beziehungsweise in ihre Anlagestellung an dem Querriegel gelangen.

Auch das dritte und/oder das vierte Klemmstück können an einem dritten und/oder vierten Teleskopteil angeordnet sein. Dieses dritte beziehungsweise vierte Teleskopteil kann relativ zu dem Grundteil und/oder relativ zu dem zugeordneten ersten beziehungsweise zweiten Teleskopteil in Richtung der Längserstreckung beweglich angeordnet sein.

Die Bewegung des dritten und/oder des vierten Klemmstücks in die Klemmstellung kann das dritte und/oder vierte Teleskopteil in Richtung auf die Ausziehstellung bewegen. Es kann sich eine gegenläufige Bewegung des dritten beziehungsweise vierten Klemmstücks zusammen mit dem dritten beziehungsweise vierten Teleskopteil relativ zu dem zugeordneten ersten beziehungsweise zweiten Klemmstück derselben Klemmaufnahme zusammen mit dem ersten beziehungsweise zweiten Teleskopteil ergeben.

Die getriebemäßige Kopplung des Klemmhebels insbesondere mit dem ersten und/oder zweiten Klemmstück, darüber hinaus gegebenenfalls aber auch mit dem dritten und/oder vierten Klemmstück, kann in einer möglichen Ausgestaltung mittels einer oder mehrerer Zahnstangen in Zusammenwirkung mit einem oder mehreren Ritzeln erreicht sein. Alternativ oder auch kombinativ zu einer oder mehreren Zahnstangen kann die Kopplung auch über einen Seilzug oder eine Kette oder ein Band erreicht sein.

So kann weiter bevorzugt zur getriebemäßigen Kopplung ein Textilband vorgesehen sein, beispielsweise ein hoch belastbares Polyester-Zurrband. Weiter kann nur ein (Zahlwort) solches Band vorgesehen sein, über welches bevorzugt alle Klemmstücke des Sperrbalkens unmittelbar oder mittelbar bewegungsgekoppelt sind.

Der Klemmhebel kann insbesondere im Fall der Anordnung eines Bandes zur getriebemäßigen Kopplung der Klemmstücke in Art eines Ratschenhebels ausgebildet sein. So kann insgesamt das Kopplungsgetriebe entsprechend einem Ratschen-Spanngurt ausgebildet sein.

In einer weiter möglichen Ausgestaltung kann der Sperrbalken ein Grundgehäuse aufweisen. Innerhalb dieses Grundgehäuses können das erste und/oder zweite Teleskopteil und/oder das dritte und/oder vierte Teleskopteil angeordnet sein. Das Grundgehäuse kann entsprechend das Grundteil darstellen, zu welchem relativ das eine oder die mehreren Teleskopteile und/oder Klemmstücke beweglich sein können.

So können das erste und/oder zweite Teleskopteil und/oder das dritte und/oder vierte Teleskopteil in dem Grundgehäuse übereinander angeordnet sein. Beispielsweise kann in einer üblichen Nutzungsstellung des Sperrbalkens, in welcher der Sperrbalken im Wesentlichen an einer horizontalen Ebene orientiert verläuft, das erste und das zweite Teleskopteil in einem oberen Abschnitt des Grundgehäuses aufgenommen sein und das dritte Teleskopteil unterhalb des ersten Teleskopteils und das vierte Teleskopteil unterhalb des zweiten Teleskopteils in einem unteren Abschnitt des Grundgehäuses.

Hierzu können in dem Grundgehäuse beispielsweise schienenartige Vorsprünge ausgebildet sein, zur gesonderten Führung des ersten, zweiten, dritten und vierten Teleskopteils. Es kann hierdurch eine lineare Verlagerbarkeit der Teleskopteile und somit der Klemmstücke relativ zu dem Grundgehäuse erreicht sein. Die lineare Verlagerbarkeit kann, wie auch bevorzugt, in Richtung der Längserstreckung des Sperrbalkens gegeben sein.

In weiterer Ausgestaltung kann in dem Grundgehäuse zugeordnet dem ersten Teleskopteil ein erstes Schlittenteil angeordnet sein, wie auch zugeordnet dem zweiten Teleskopteil ein zweites Schlittenteil. Über das Schlittenteil kann über die getriebemäßige Kopplung im Zuge einer Schwenkbewegung des Klemmhebels eine mittelbare Einwirkung erreicht sein. Das Schlittenteil kann hierzu ein Kopplungsteil bilden, welches beispielsweise ein mit dem Klemmhebel gekoppeltes Band mit einem weiteren, auf das zugeordnete Teleskopteil einwirkenden gesonderten Band verbindet.

Das mit dem ersten Schlittenteil verbundene und mit dem Klemmhebel zusammenwirkende Band kann in weiterer Ausgestaltung einteilig ausgebildet auch mit dem zweiten Schlittenteil verbunden sein.

Das erste Schlittenteil kann darüber hinaus relativ zu dem ersten Teleskopteil in dem Grundgehäuse linear verschiebbar aufgenommen sein, wie auch das relativ zu dem zweiten Teleskopteil verschiebbare zweite Schlittenteil.

Zufolge der Zwischenschaltung der vorgeschlagenen Schlittenteile ist eine weiter verbesserte Ansteuerung der Klemmaufnahmen erreichbar.

Auch können das erste Teleskopteil und/oder das zweite Teleskopteil durch Federkraft in Richtung auf eine Teleskop-Einzugsstellung belastet sein, in welcher Teleskop-Einzugsstellung der Sperrbalken insgesamt bevorzugt eine Minimalerstreckung einnimmt. So kann weiter beispielsweise ein expanderartiges Federelement, weiter beispielsweise eine Zugfeder, bei Verankerung an dem Grundgehäuse auf das Teleskopteil derart einwirken, dass eine Teleskop-Auszugstellung, beispielsweise im Zuge eines Ansetzens des Sperrbalkens, nur unter Überwindung der Rückstellkraft der Feder erreichbar ist.

Die vor- und nachstehend angegebenen Bereiche bzw. Wertebereiche oder Mehrfachbereiche schließen hinsichtlich der Offenbarung auch sämtliche Zwischenwerte ein, insbesondere in 1/10-Schritten der jeweiligen Dimension, gegebenenfalls also auch dimensionslos. Beispielsweise beinhaltet die Angabe 10 bis 15 Grad auch die Offenbarung von 10,1 bis 15 Grad, 10 bis 14,9 Grad, 10,1 bis 14,9 Grad etc. Diese Offenbarung kann einerseits zur Eingrenzung einer genannten Bereichsgrenze von unten und/oder oben, alternativ oder ergänzend aber auch zur Offenbarung eines oder mehrerer singulärer Werte aus einem jeweilig angegebenen Bereich dienen.

### Kurze Beschreibung der Zeichnungen

Nachstehend ist die Erfindung anhand der beigefügten Zeichnung erläutert, die aber lediglich Ausführungsbeispiele darstellt. Ein Bestandteil, das nur bezogen auf eines der Ausführungsbeispiele erläutert ist und bei einem weiteren Ausführungsbeispiel aufgrund der dort herausgestellten Besonderheit nicht durch ein anderes Bestandteil ersetzt ist, ist damit auch für dieses weitere Ausführungsbeispiel als jedenfalls mögliches vorhandenes Bestandteil beschrieben. Die Zeichnung zeigt:
- Fig. 1: einen Sperrbalken einer ersten Ausführungsform in perspektivischer Darstellung, eine Ausziehstellung betreffend;
- Fig. 2: eine Vergrößerung des Bereichs II in Figur 1;
- Fig. 3: eine Vergrößerung des Bereichs III in Figur 1;
- Fig. 4: eine Vergrößerung des Bereichs IV in Figur 1;
- Fig. 5: einen Schnitt durch die Ebene V in Figur 1;
- Fig. 6: eine explosionsperspektivische Darstellung eines ersten Endbereichs des Sperrbalkens mit einer ersten Klemmaufnahme, aufweisend ein erstes und ein drittes Klemmstück sowie ein erstes und ein drittes Teleskopteil;
- Fig. 7: eine explosionsperspektivische Darstellung eines Mittenbereichs des Sperrbalkens mit einem Klemmhebel und einem über den Klemmhebel bedienbaren Ratschengetriebe;
- Fig. 8: einen Schnitt durch die Ebene VIII in Figur 2;
- Fig. 9: einen vergrößerten Bereich IX in Figur 8;
- Fig. 10: einen vergrößerten Bereich X in Figur 9;
- Fig. 11: einen vergrößerten Bereich XI in Figur 8;
- Fig. 12: einen vergrößerten Bereich XII in Figur 11;
- Fig. 13: einen vergrößerten Bereich XIII in Figur 11;
- Fig. 14: einen vergrößerten Bereich XIV in Figur 8;
- Fig. 15: einen Mittenbereich des Sperrbalkens gemäß Figur 11 in perspektivischer, partiell geschnittener Darstellung;
- Fig. 16: einen ersten Endbereich gemäß Figur 6 in einer perspektivischen, partiell aufgebrochenen Darstellung;
- Fig. 17: einen Schnitt durch die Ebene XVII in Figur 16;
- Fig. 18: eine schematisch dargestellte, partiell geschnittene Rückansicht gegen einen geöffneten Lastkraftwagen-Aufbau mit einem Sperrbalken in einer Nutzungsstellung;
- Fig. 19: eine Vergrößerung des Bereichs XIX in Figur 18;
- Fig. 20: einen vergrößerten Schnitt entlang der Linie XX - XX in Figur 19;
- Fig. 21: eine der Figur 9 entsprechende Schnittdarstellung des ersten Endbereichs, eine erste Klemmanlagestellung des ersten Klemmstücks der ersten Klemmaufnahme betreffend;
- Fig. 22: eine der Figur 11 entsprechende Schnittdarstellung des Mittenbereichs, die erste Klemmanlagestellung gemäß Figur 21 betreffend;
- Fig. 23: eine Folgedarstellung zu Figur 21, eine zweite Klemmanlagestellung auch des dritten Klemmstücks der ersten Klemmaufnahme betreffend;
- Fig. 24: eine Folgedarstellung zu Figur 22, die zweite Klemmanlagestellung gemäß Figur 23 betreffend;
- Fig. 25: eine Folgedarstellung zu Figur 23, die Klemmstellung der ersten Klemmaufnahme betreffend;
- Fig. 26: eine Folgedarstellung zu Figur 24, die Klemmstellung gemäß Figur 25 betreffend;
- Fig. 27: eine im Wesentlichen der Figur 19 entsprechende Schnittdarstellung, betreffend die Klemmstellung gemäß Figur 25;
- Fig. 28: eine der Figur 15 entsprechende Darstellung des Mittenbereichs, die Klemmstellung gemäß Figur 25 betreffend;
- Fig. 29: eine der Figur 20 entsprechende Schnittdarstellung, die Klemmstellung gemäß Figur 25 betreffend;
- Fig. 30: eine der Figur 29 entsprechende Darstellung, betreffend eine gegenüber Figur 29 geänderte Ausrichtung des Spannbalkens;
- Fig. 31: eine der Figur 6 im Wesentlichen entsprechende Darstellung eines Endbereichs des Sperrbalkens, betreffend eine zweite Ausführungsform;
- Fig. 32: eine der Figur 7 im Wesentlichen entsprechende Darstellung eines Mittenbereichs, betreffend eine zweite Ausführungsform;
- Fig. 33: in perspektivischer Einzeldarstellung ein Schlittenteil des Sperrbalkens der zweiten Ausführungsform;
- Fig. 34: eine Längsschnittdarstellung des Sperrbalkens der zweiten Ausführungsform in einer Teleskop-Einzugsstellung;
- Fig. 35: einen vergrößerten Bereich XXXV in Figur 34;
- Fig. 36: einen vergrößerten Bereich XXXVI in Figur 34;
- Fig. 37: einen vergrößerten Bereich XXXVII in Figur 36;
- Fig. 38: einen vergrößerten Bereich XXXVIII in Figur 34;
- Fig. 39: einen Schnitt entlang der Linie XXXIX - XXXIX in Figur 38;
- Fig. 40: eine Längsschnittdarstellung gemäß Figur 34, jedoch eine Teleskop-Auszugsstellung des Sperrbalkens betreffend;
- Fig. 41: einen vergrößerten Bereich XLI in Figur 40, eine erste Klemmanlagestellung eines ersten Klemmstücks betreffend;
- Fig. 42: eine Folgedarstellung zu Figur 41, eine zweite Klemmanlagestellung auch eines dritten Klemmstücks betreffend;
- Fig. 43: eine der Figur 37 entsprechende Schnittdarstellung des Mittenbereichs, die zweite Klemmanlagestellung gemäß Figur 42 betreffend;
- Fig. 44: eine Folgedarstellung zu Figur 42, die Klemmstellung der ersten Klemmaufnahme betreffend;
- Fig. 45: eine Folgedarstellung zu Figur 43, die Klemmstellung gemäß Figur 44 betreffend.

### Beschreibung der Ausführungsformen

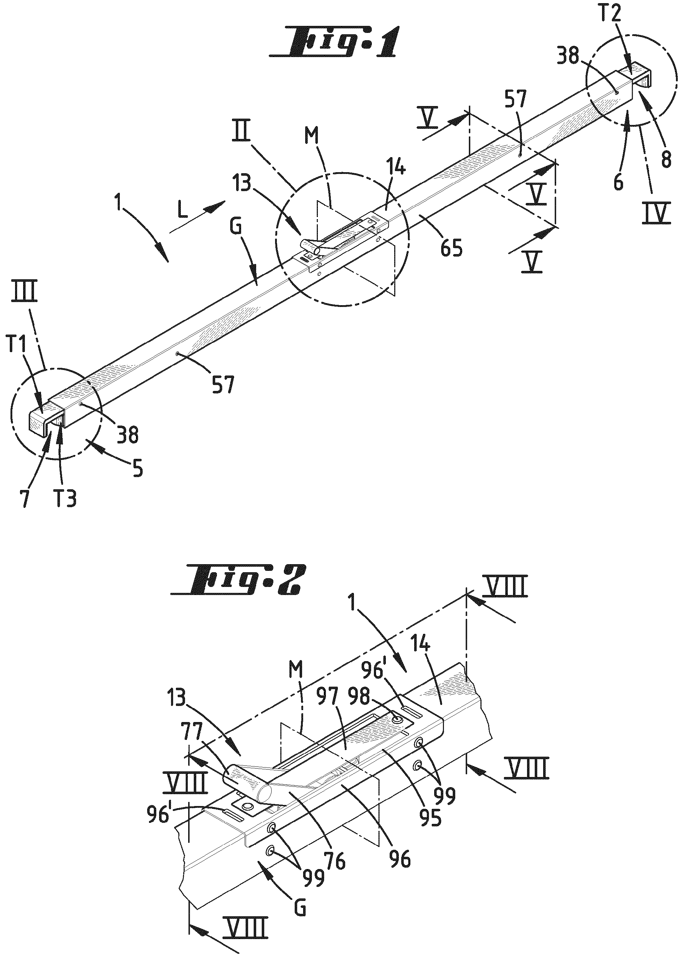

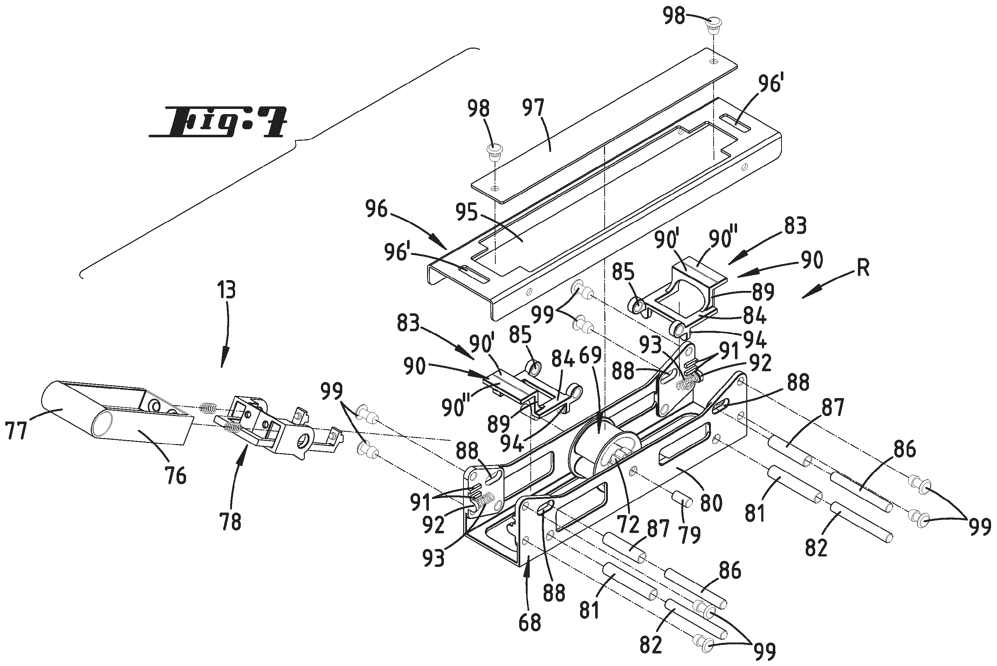

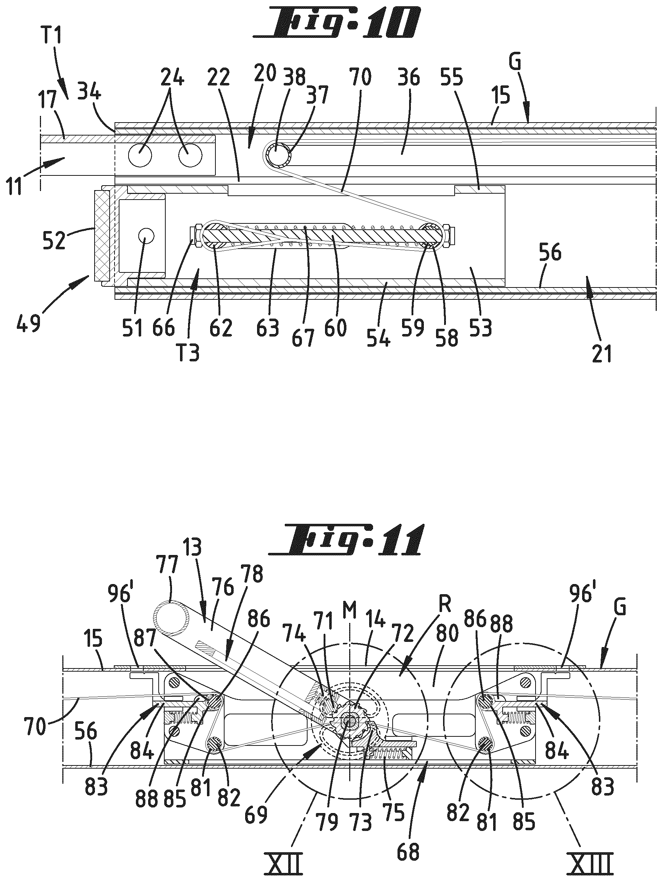

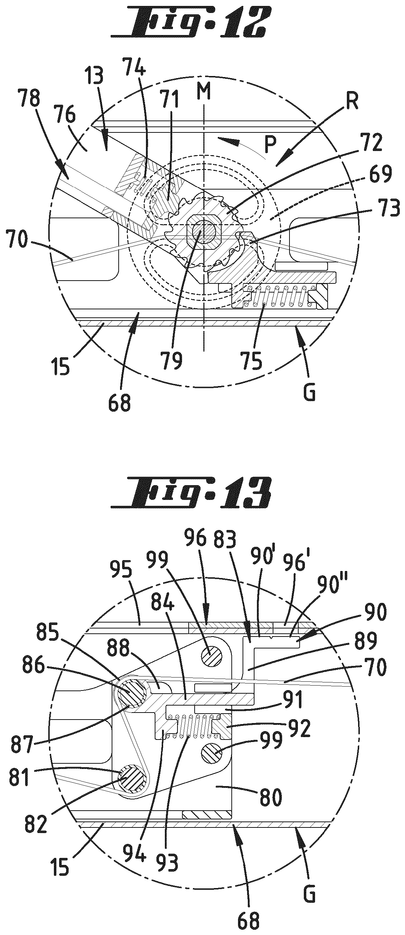

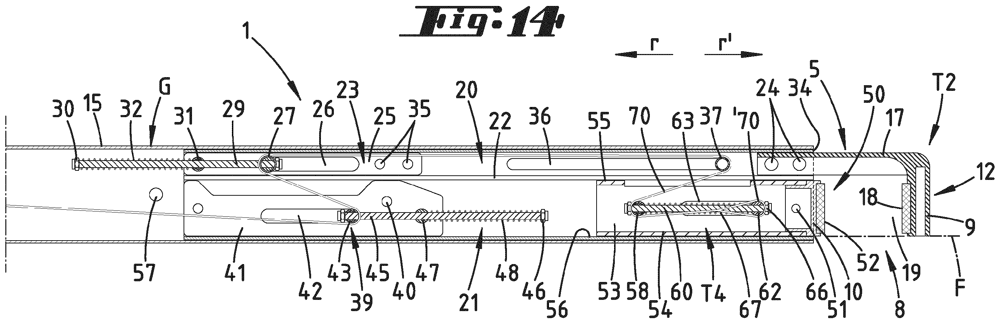

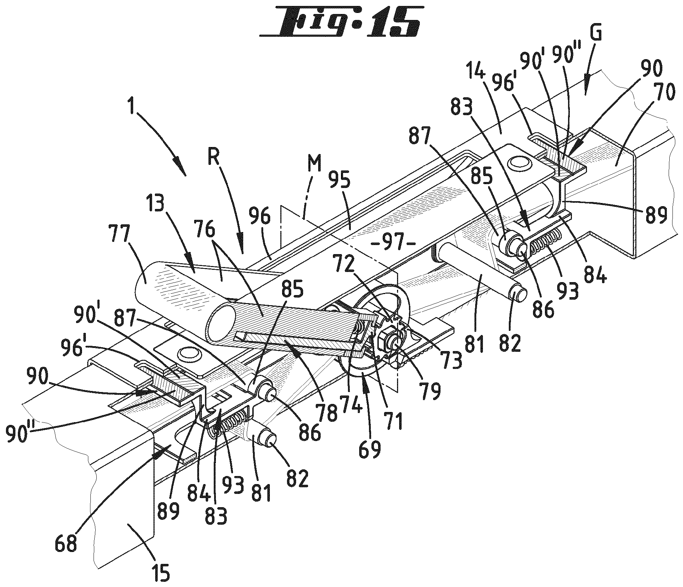

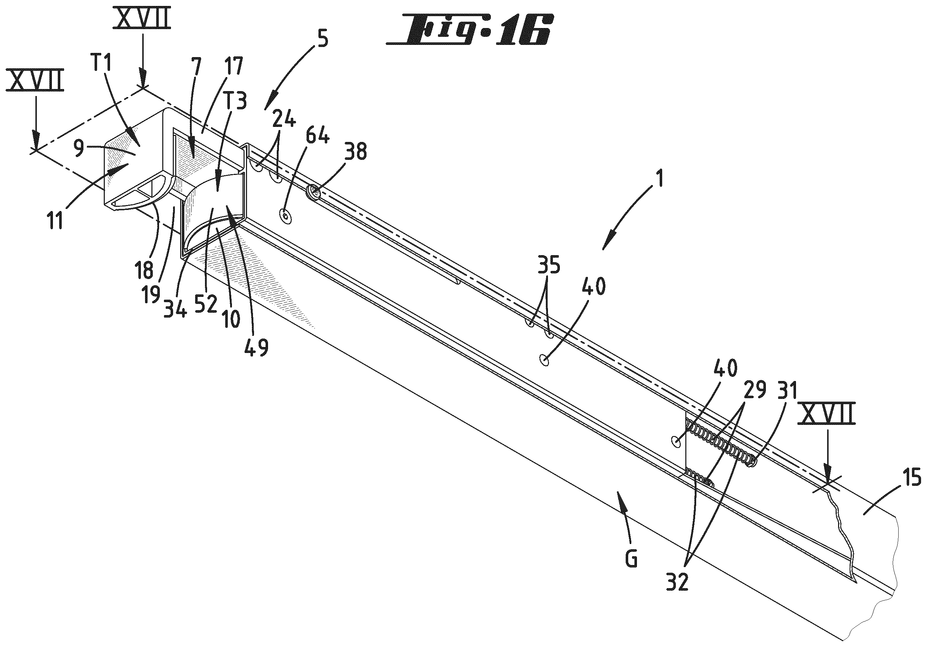

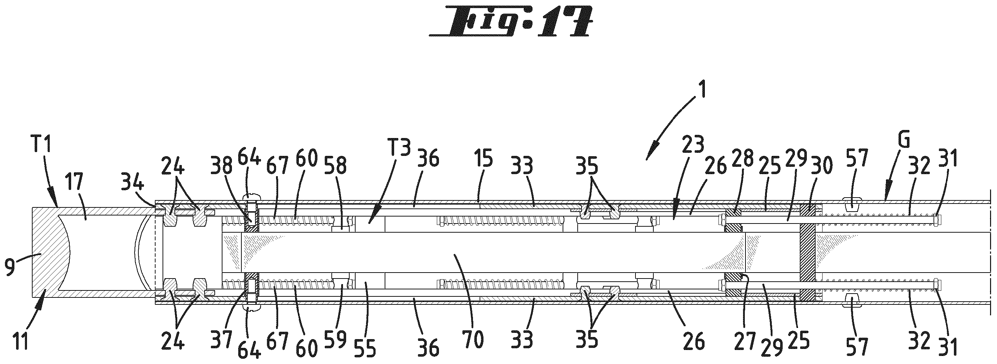

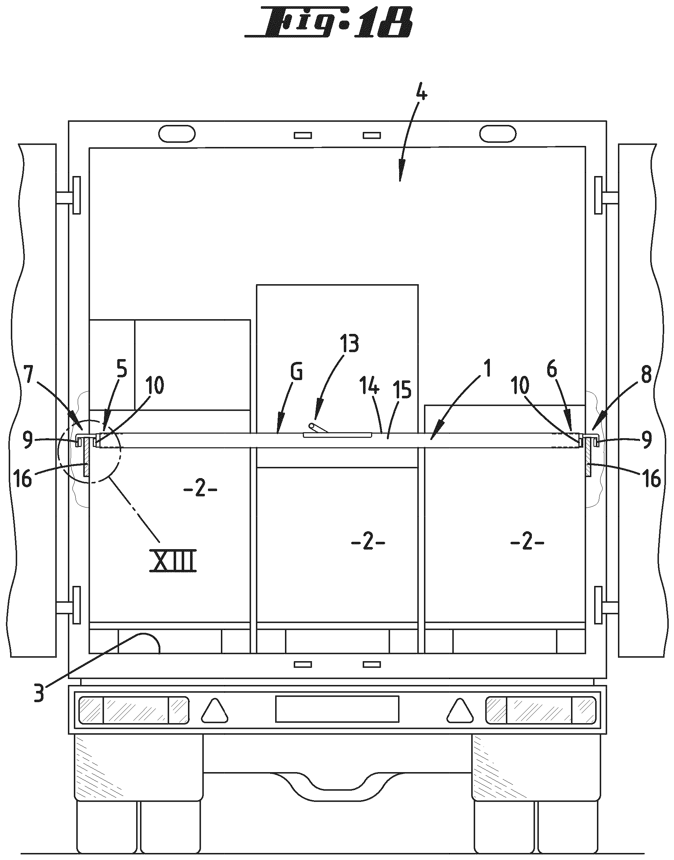

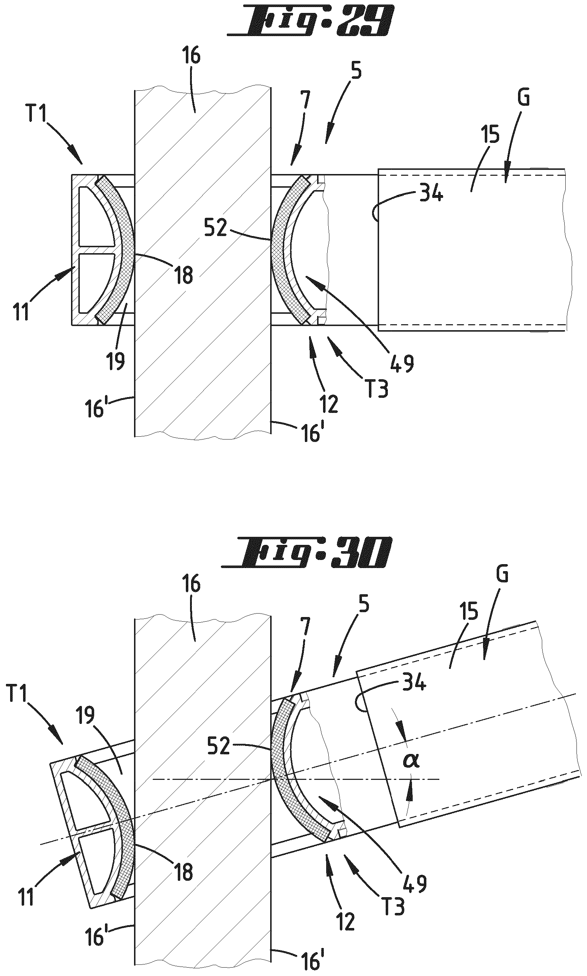

Dargestellt und beschrieben ist, zunächst mit Bezug zu den Figuren 1 bis 30, eine erste Ausführungsform eines Sperrbalkens 1, insbesondere zur Sicherung von Ladung 2 auf einer Ladefläche 3 eines Lastkraftwagen-Aufbaus 4.

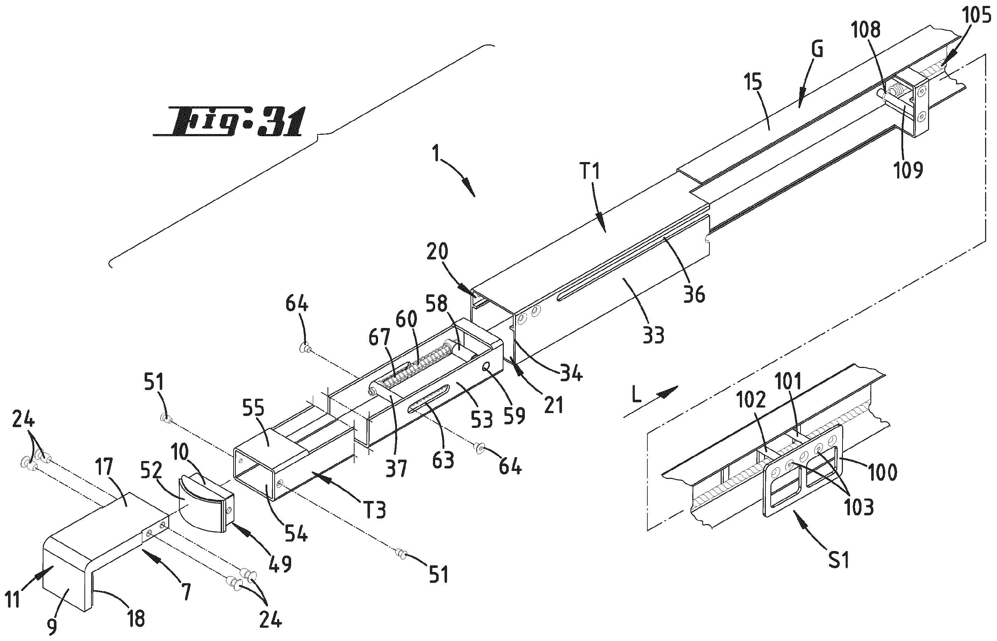

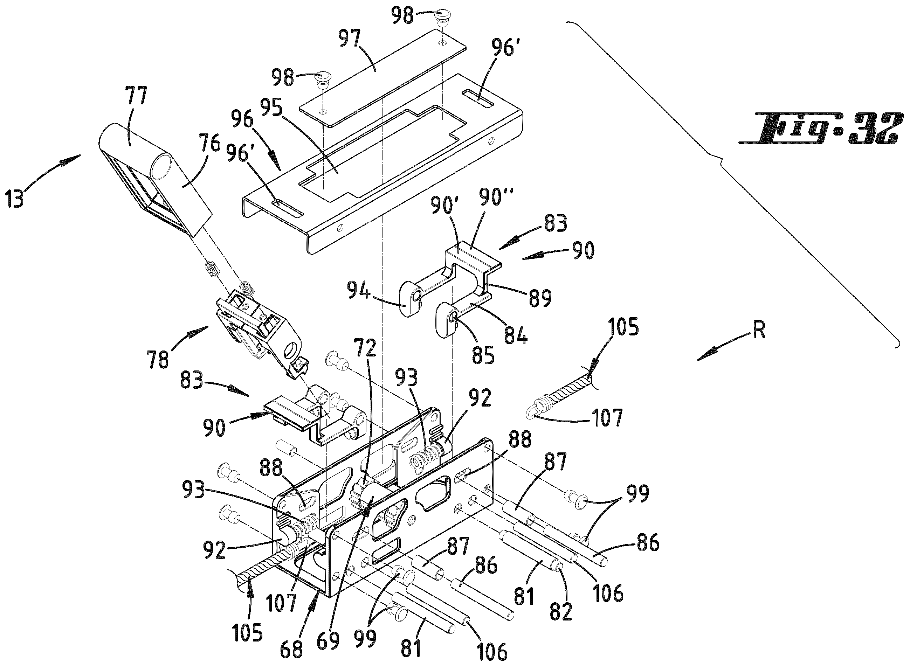

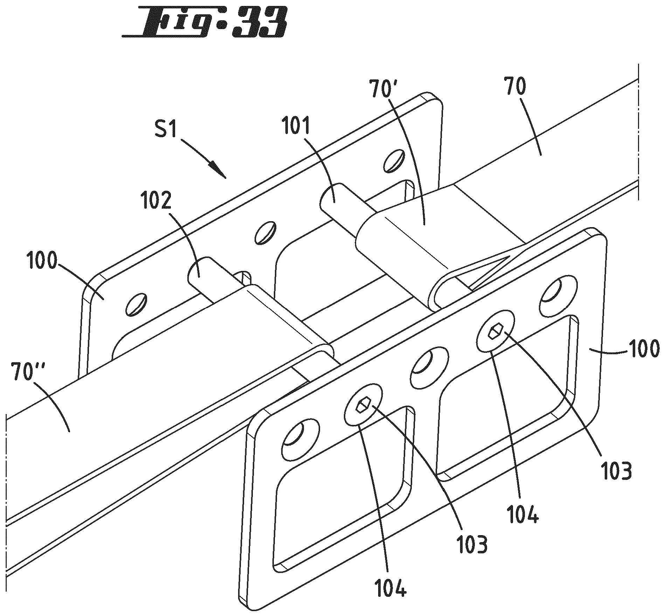

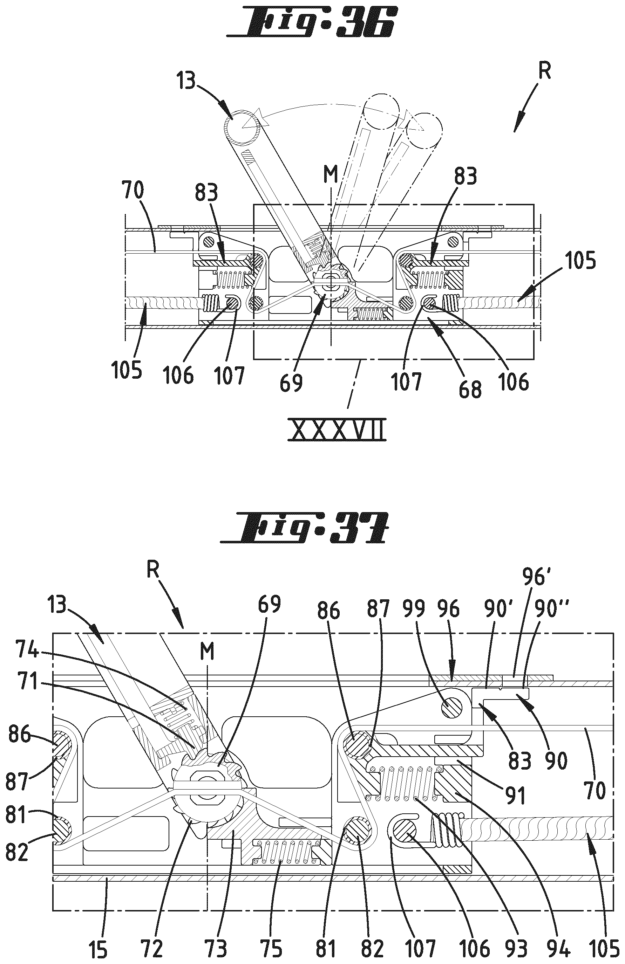

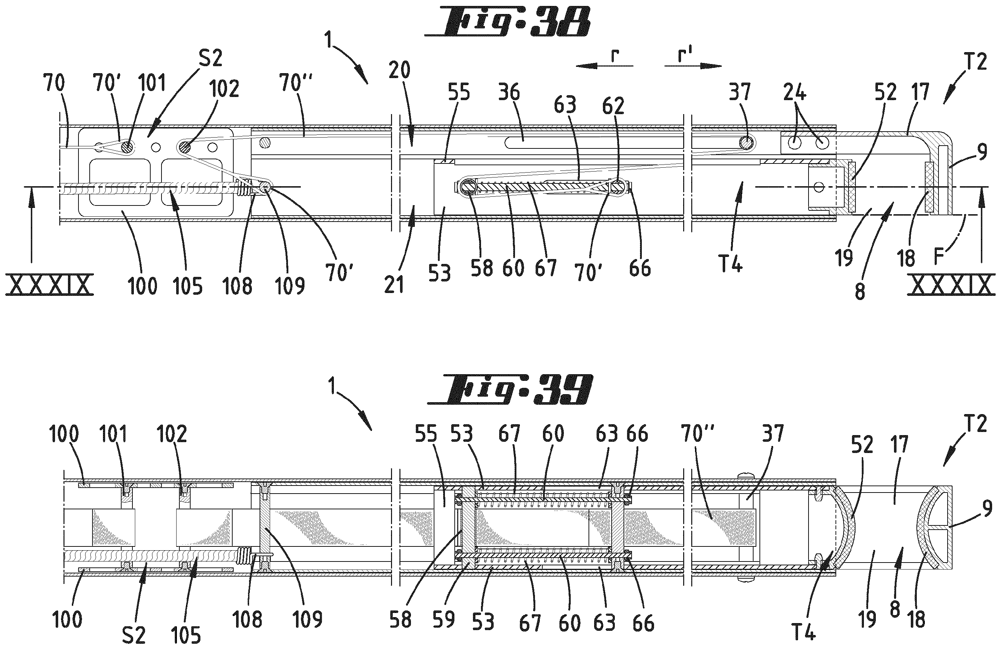

Die Figuren 31 bis 45 zeigen eine zweite Ausführungsform eines solchen Sperrbalkens 1.

Der Sperrbalken 1 weist an gegenüberliegenden Enden 5 und 6 ausgebildete, im Wesentlichen U-förmige Klemmaufnahmen, eine erste Klemmaufnahme 7 und eine zweite Klemmaufnahme 8, auf.

Die Klemmaufnahmen 7 und 8 im Bereich der Enden 5 und 6 können mit Bezug auf eine mittig der Längserstreckung L des Sperrbalkens 1 und senkrecht zu der Längserstreckung L ausgerichtete Mittelebene M spiegelsymmetrisch ausgebildet sein.

Die erste Klemmaufnahme 7 kann ein erstes Klemmstück 11 und die zweite Klemmaufnahme 8 ein zweites Klemmstück 12 aufweisen. Die ersten und zweiten Klemmstücke 11, 12 bilden jeweils insbesondere einen ersten U-Schenkel 9 der U-förmigen Klemmaufnahme 7, 8.

Das erste und das zweite Klemmstück 11 und 12 sind zwischen einer Klemmstellung und einer Freigabestellung mittels eines schwenkbaren Klemmhebels 13 bewegbar. Der Klemmhebel 13 ist in dem die Mittelebene M aufnehmenden Mittenbereich 14 des Sperrbalkens 1 angeordnet.

Der Sperrbalken 1 weist ein Grundteil 15 in Form eines in einem Querschnitt senkrecht zu der Längserstreckung L im Wesentlichen rechteckigen, weiter gegebenenfalls quadratischen, rohrförmigen Grundgehäuses G auf, welches sich in Längserstreckung L des Sperrbalkens 1 etwa über 85 bis 95 Prozent der Gesamtlänge des Sperrbalkens 1 in der Ausziehstellung gemäß Figur 1 erstrecken kann.

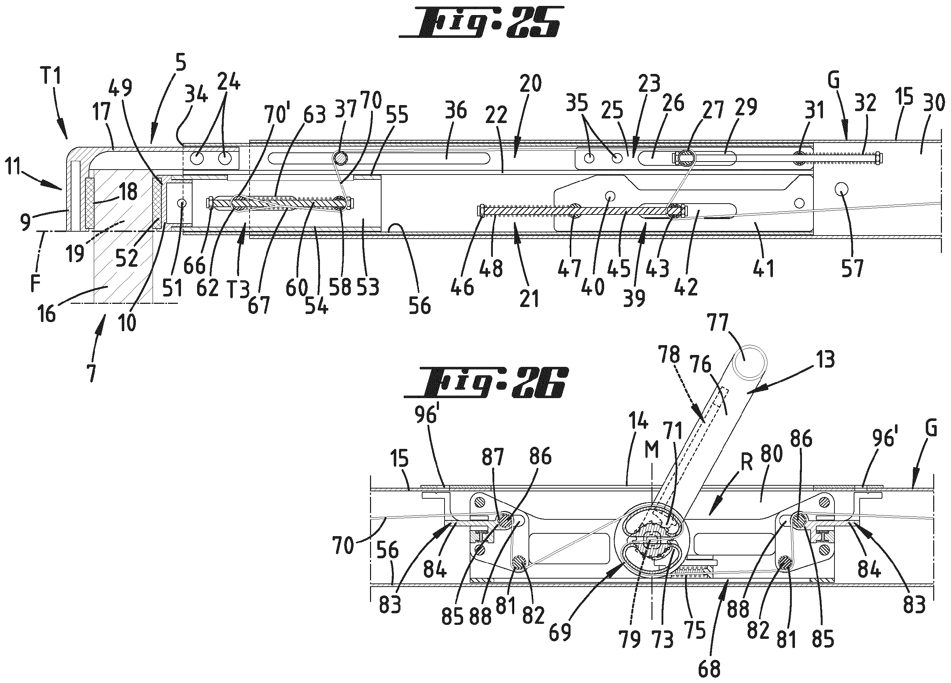

Darüber hinaus weist der Sperrbalken 1 zunächst zwei relativ zu dem Grundgehäuse G beziehungsweise dem Grundteil 15 in eine Ausziehstellung gemäß Figur 1 und in eine Einziehstellung gemäß Figur 25 bewegbare Teleskopteile auf, ein erstes Teleskopteil T1 und ein zweites Teleskopteil T2. Mittels dieser bevorzugt linear in Richtung der Längserstreckung L verlagerbaren Teleskopteile T1 und T2 ist eine Längenanpassung des Sperrbalkens 1 an die Gegebenheiten - beispielsweise an den Abstand zweier über den Sperrbalken 1 miteinander zu verbindender Querriegel 16 des Lastkraftwagen-Aufbaus 4 - ermöglicht. Mit einer Verlagerung der Teleskopteile T1 und T2 in eine Ausziehrichtung r' kann sich eine Längenvergrößerung und mit einer Verlagerung der Teleskopteile T1 und T2 in eine Einziehrichtung r eine Längenreduzierung des Sperrbalkens 1 ergeben.

Insbesondere in die Einziehrichtung r kann die Verlagerbarkeit des ersten und zweiten Teleskopteils T1, T2 innerhalb des Grundgehäuses G anschlagbegrenzt sein. Hierzu können in Seitenwandungen 65 des Grundgehäuses G nach innen vorragende Anschlagstifte 57 gehaltert sein.

Das erste und das zweite Klemmstück 11 und 12 können an dem ersten beziehungsweise an dem zweiten Teleskopteil T1 und T2 angeordnet beziehungsweise von diesen ausgebildet sein. Die ersten und zweiten Klemmstücke 11 und 12 können dabei starr und bewegungsgekoppelt mit dem jeweiligen Teleskopteil T1 beziehungsweise T2 verbunden sein. Eine Bewegung des Teleskopteils T1 oder T2 in Längserstreckung L des Sperrbalkens 1 hat eine entsprechende Bewegung des gekoppelten Klemmstücks 11 beziehungsweise 12 zur Folge.

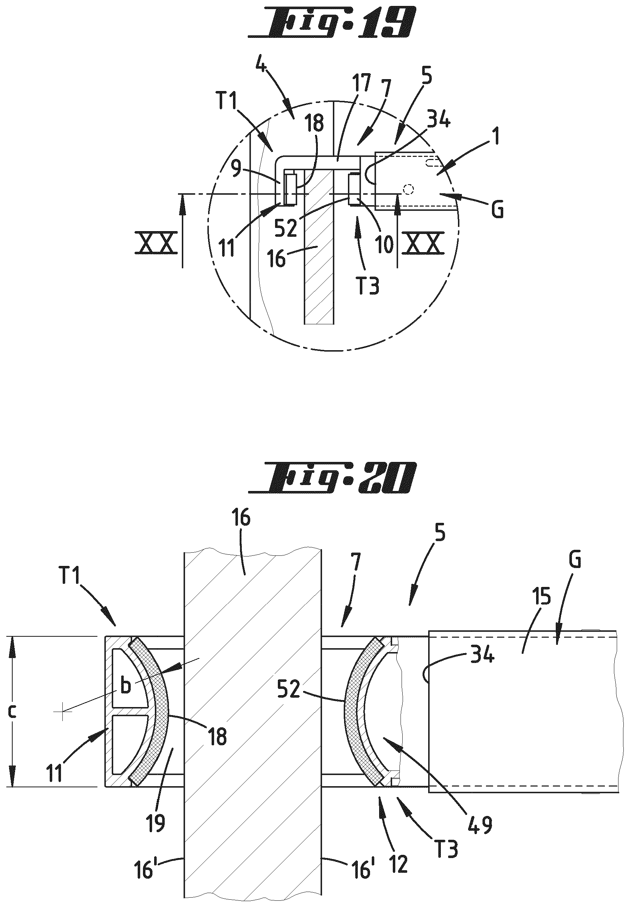

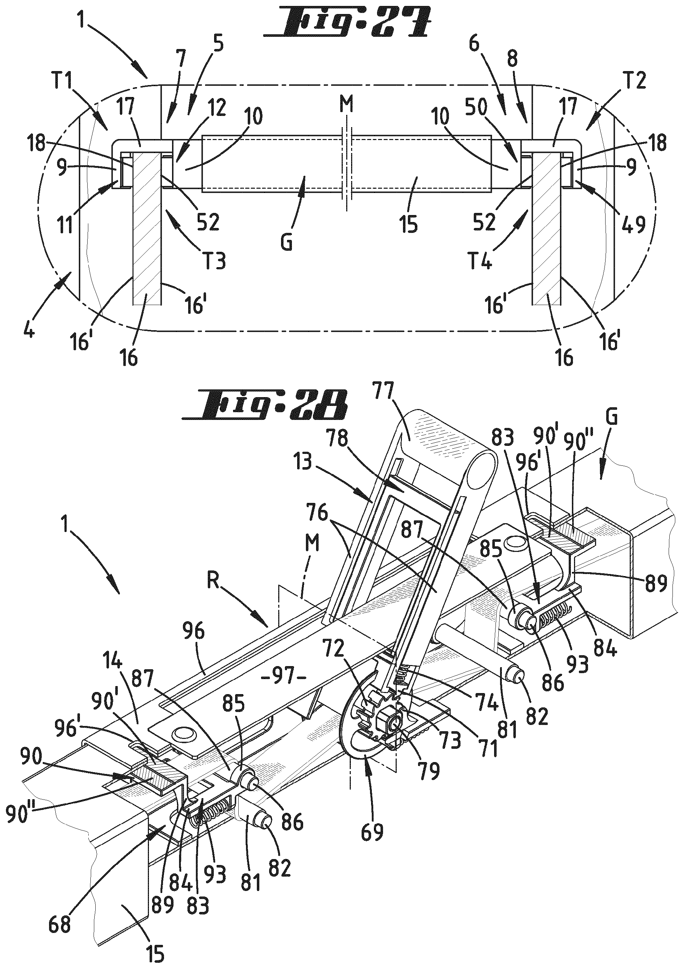

Die den ersten U-Schenkel 9 der U-förmigen Klemmaufnahme 7, 8 bildenden Klemmstücke 11, 12 können ausgebildet sein beispielsweise zur Zusammenwirkung mit einem Querriegel 16 einer Fahrzeugwand, insbesondere mit einer Fahrzeugwand eines Lastkraftwagen-Aufbaus 4. Dabei können die Klemmstücke 11 und 12 zugleich auch, zumindest teilweise, den U-Steg 17 der U-förmigen Klemmaufnahme 7, 8 bilden, so dass sich in einer Klemmstellung eine Abstützung des jeweiligen Klemmstücks 11, 12 auf einem solchen Querriegel 16 ergeben kann, während der erste U-Schenkel 9 des Klemmstücks 11, 12 den Querriegel 16 hintergreift (vergleiche Figuren 19 und 27).

Wandungsinnenseitig des ersten U-Schenkels 9 ist zugewandt der U-Öffnung 19 der ersten beziehungsweise zweiten Klemmaufnahme 7, 8 eine Klemmfläche 18 ausgeformt. Diese verläuft in einem Querschnitt durch die Klemmfläche 18 parallel zu einer Öffnungsebene F der Klemmaufnahme 7, 8 in Richtung der U-Öffnung 19 konvex gekrümmt (vergleiche Figur 20). Es kann sich ein Radiusmaß b der Klemmfläche 18 ergeben, welches im Wesentlichen etwa dem quer zu der Längserstreckung L betrachteten Breitenmaß c des ersten U-Schenkels 9 entsprechen kann.

In dem Grundgehäuse G können jeweils, den Enden 5 und 6 zugeordnet, die in Längserstreckung L schiebeverlagerbaren, rohrförmigen erste beziehungsweise zweite Teleskopteile T1, T2 angeordnet sein, mit einer an die Innen-Querschnittsfläche des Grundgehäuses G angepasster Außenkontur.

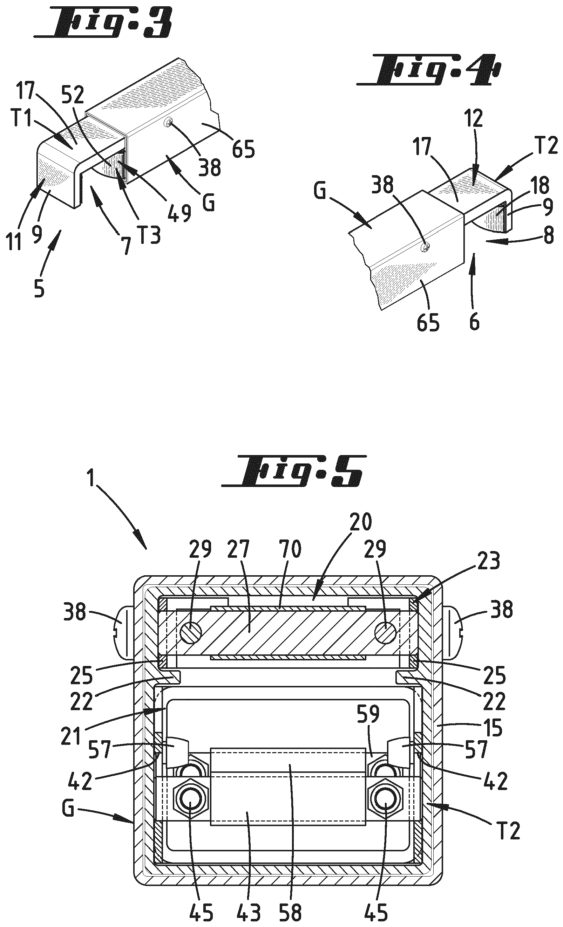

Wie insbesondere aus der Darstellung in den Figuren 5, 6 oder 31 ersichtlich, kann ein erstes oder zweites Teleskopteil T1, T2, bezogen auf den Querschnitt, zwei Kammerbereiche aufweisen, einen in üblicher Nutzungsstellung des Sperrbalkens 1 oberen Kammerbereich 20 und einen unteren Kammerbereich 21.

Diese Kammerbereiche 20 und 21 sind zueinander distanziert durch jeweils wandungsinnenseitig einer Seitenwand 33 des Teleskopteils T1, T2 ausgebildete, in Richtung der Längserstreckung L verlaufende schienenartige Vorsprünge 22. Der untere Kammerbereich 21 weist eine senkrecht zu dem Breitenmaß c betrachtete Höhe auf, die etwa dem 2-Fachen der in selber Richtung betrachteten Höhe des oberen Kammerbereichs 20 entsprechen kann.

In dem oberen Kammerbereich 20 ist zugeordnet dem jeweiligen Ende 5, 6 das erste beziehungsweise zweite Klemmstück 11, 12 starr mit dem Teleskopteil T1 oder T2 verbunden. Die Verbindung kann zufolge einer Vernietung (Niete 24) zwischen dem U-Steg 17 des ersten beziehungsweise zweiten Klemmstücks 11, 12 und der Seitenwand 33 des Teleskopteils T1, T2 erreicht sein.

Der U-Steg 17 ragt über die Stirnfläche 34 des Teleskopteils T1, T2 frei hinaus, sodass der jeweilige erste U-Schenkel 9 mit dessen Klemmfläche 18 in Richtung der Längserstreckung L zu der Stirnfläche 34 beabstandet ist.

Weiter kann gemäß dem dargestellten ersten Ausführungsbeispiel in dem oberen Kammerbereich 20 eine erste Umlenkvorrichtung 23 vorgesehen sein. Die erste Umlenkvorrichtung 23 weist zwei in Längserstreckung L gerichtete, parallel zueinander beabstandet verlaufende Seitenwände 25 auf, in welchen in Längserstreckung L verlaufende Schlitzausnehmungen 26 ausgebildet sind. In diesen Schlitzausnehmungen 26 ist eine erste Band-Umlenkrolle 27 verlagerbar geführt.

Die erste Band-Umlenkrolle 27 kann auf einer Achse 28 drehbar gelagert sein, welche Achse 28 jeweils endseitig in einer der Schlitzausnehmungen 26 geführt ist.

Die Enden der Achse 28 können über die Schlitzausnehmungen 26 nach außen vorragen und die zugeordnete Seitenwandung 65 des Grundgehäuses G durchsetzen, womit auch die Verlagerbarkeit des ersten und zweiten Teleskopteils T1, T2 in die Ausziehrichtung r' anschlagbegrenzt sein kann.

Mit der Achse 28 können zwei in Längserstreckung L verlaufende Führungsstangen 29 verbunden sein, die einen quer zu der Längserstreckung L verlaufenden Abstützsteg 30 der ersten Umlenkvorrichtung 23 durchsetzen. Der Abstützsteg 30 ist an einem dem zugeordneten Klemmstück 11 beziehungsweise 12 abgewandten Ende der ersten Umlenkvorrichtung 23 ausgebildet.

Die Führungsstangen 29 ragen frei über das durch den Abstützsteg 30 definierte Ende der ersten Umlenkvorrichtung 23 hinaus und formen im Bereich ihrer freien Enden jeweils eine gegenüber den Führungsstangen 29 durchmesservergrößerte Anschlagschulter 31 aus. Eine jeweils den über die erste Umlenkvorrichtung 23 hinausragenden Abschnitt der Führungsstange 29 umgebende Feder 32 - beispielsweise in Form einer Zylinder-Druckfeder - kann sich jeweils endseitig an der Anschlagschulter 31 und an dem Abstützsteg 30 abstützen und belastet so die erste Band-Umlenkrolle 27 in Richtung einer Anschlagstellung an dem dem jeweiligen Klemmstück 11, 12 abgewandten Ende der Schlitzausnehmung 26.

Die erste Umlenkvorrichtung 23 ist darüber hinaus im Bereich der Seitenwände 25 beispielsweise über weitere Niete 35 verlagerungsfest mit den Seitenwänden 33 des ersten oder zweiten Teleskopteils T1, T2 verbunden. Dabei können sich die Seitenwände 33 der ersten Umlenkvorrichtung 23 auf den Vorsprüngen 22 des Teleskopteils T1, T2 abstützen.

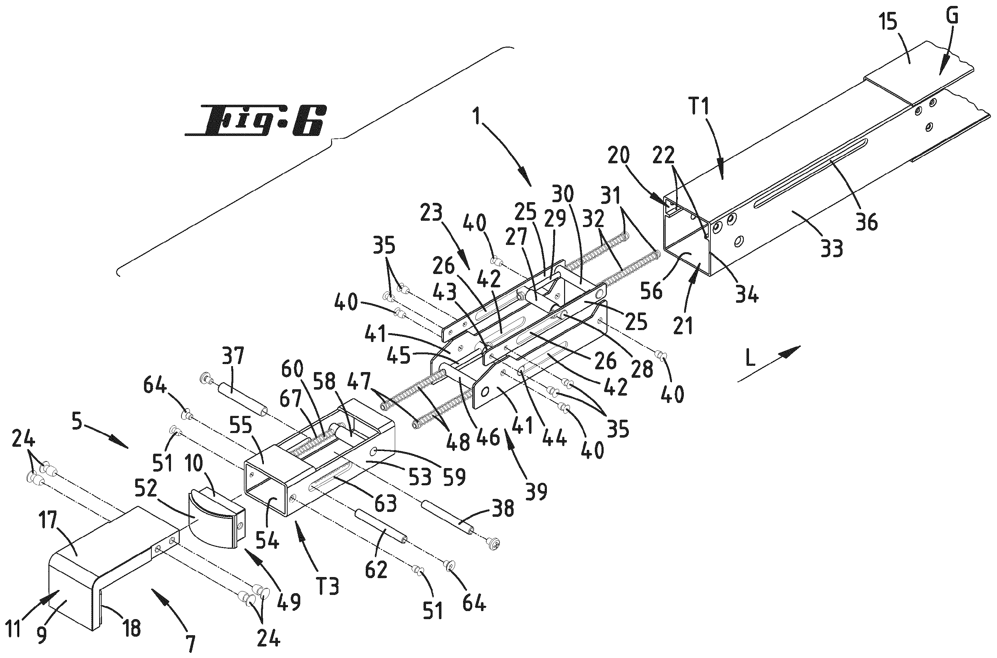

Ebenfalls dem oberen Kammerbereich 20 zugeordnet können in den Seitenwänden 33 des Teleskopteils T1, T2 in Richtung der Längserstreckung L verlaufende schlitzförmige Langlöcher 36 vorgesehen sein. Diese sind dem Befestigungsbereich der ersten Umlenkvorrichtung 23 an dem Teleskopteil T1, T2 in Richtung auf das zugehörige Klemmstück 11, 12 vorgelagert (vergleiche auch Figur 6). In diesen Langlöchern 36 ist eine zweite Band-Umlenkrolle 37 über eine Achse 38 drehbar und in den Langlöchern 36 verlagerbar gelagert.

In dem unteren Kammerbereich 21 eines jeden ersten oder zweiten Teleskopteils T1, T2 kann weiter eine zweite Umlenkvorrichtung 39 vorgesehen sein, die beispielsweise mittels weiterer, die Seitenwände 33 des Teleskopteils T1, T2 sowie parallel hierzu innenseitig verlaufende Seitenwände 41 der zweiten Umlenkvorrichtung 39 durchsetzender Niete 40 starr mit dem ersten beziehungsweise zweiten Teleskopteil T1, T2 verbunden ist.

Die zweite Umlenkvorrichtung 39 kann unmittelbar unterhalb der ersten Umlenkvorrichtung 23 angeordnet sein.

In den parallel zueinander beabstandet verlaufenden Seitenwänden 41 der zweiten Umlenkvorrichtung 39 sind in Längserstreckung L verlaufende Schlitzausnehmungen 42 ausgebildet. In diesen Schlitzausnehmungen 42 ist eine dritte Band-Umlenkrolle 43 verlagerbar geführt.

Auch diese dritte Band-Umlenkrolle 43 kann auf einer Achse 44 drehbar gelagert sein, welche Achse 44 jeweils endseitig in einer der Schlitzausnehmungen 42 geführt ist.

Mit der Achse 44 können zwei in Längserstreckung L verlaufende Führungsstangen 45 verbunden sein, die einen quer zu der Längserstreckung L verlaufenden Abstützsteg 46 der zweiten Umlenkvorrichtung 39 durchsetzen. Der Abstützsteg 46 ist an einem dem zugeordneten Klemmstück 11 beziehungsweise 12 zugewandten Ende der zweiten Umlenkvorrichtung 39 ausgebildet.

Die Führungsstangen 45 ragen frei über das durch den Abstützsteg 46 definierte Ende der zweiten Umlenkvorrichtung 39 hinaus und formen im Bereich ihrer freien Enden jeweils eine gegenüber den Führungsstangen 45 durchmesservergrößerte Anschlagschulter 47 aus. Eine jeweils den über die zweite Umlenkvorrichtung 39 hinausragenden Abschnitt der Führungsstange 45 umgebende Feder 48 - auch hier beispielsweise in Form einer Zylinder-Druckfeder - kann sich jeweils endseitig an der Anschlagschulter 47 und an dem Abstützsteg 46 abstützen und belastet so die dritte Band-Umlenkrolle 43 in Richtung einer Anschlagstellung an dem dem jeweiligen Klemmstück 11, 12 zugewandten Ende der Schlitzausnehmung 42.

Weiter ist Bestandteil des Sperrbalkens 1 ein der ersten Klemmaufnahme 7 zugeordnetes drittes Klemmstück 49 und ein der zweiten Klemmaufnahme 8 zugeordnetes viertes Klemmstück 50. Die Klemmstücke 49 und 50 können, wie auch bevorzugt, an dritten und vierten Teleskopteilen T3, T4 befestigt sein. Auch können diese dritten und vierten Teleskopteile T3, T4, wie auch deren dritte und vierte Klemmstücke 49, 50, im Wesentlichen gleichgestaltet sein.

Die Klemmstücke 49 und 50 können stopfenartig ausgebildet sein, zum Einsetzen in eine zugewandte Stirnöffnung des zugehörigen Teleskopteils T3 beziehungsweise T4. Eine Befestigung kann beispielsweise über weitere Niete 51 erreicht sein.

Weiter bilden die dritten und vierten Klemmstücke 49 und 50 mit ihren in Richtung auf die gegenüberliegenden ersten und zweiten Klemmstücke 11, 12 gerichteten Klemmflächen 52 zweite U-Schenkel 10 der jeweiligen Klemmaufnahme 7, 8. Die Klemmflächen 52 sind, wie die Klemmflächen 18 der ersten und zweiten Klemmstücke 11, 12, konvex gekrümmt - bevorzugt mit demselben Radiusmaß b - verlaufend ausgebildet, wobei die Krümmungsflächen der ersten und dritten Klemmstücke 11 und 49 sowie die Krümmungsflächen der zweiten und vierten Klemmstücke 12 und 50 jeweils aufeinander zu gerichtet sind.

Zwischen dem ersten und dritten Klemmstück 11 und 49 beziehungsweise zwischen dem zweiten und vierten Klemmstück 12 und 50 und so entsprechend jeweils zwischen dem ersten U-Schenkel 9 und dem zweiten U-Schenkel 10 ergibt sich die U-Öffnung 10 der jeweiligen U-förmigen Klemmaufnahme 7, 8.

Das dritte beziehungsweise vierte Teleskopteil T3, T4 weist einen kastenartigen Aufbau auf, mit zwei in Richtung der Längserstreckung L verlaufenden Seitenwänden 53 sowie einem Kastenboden 54 und eine mit einem Band-Durchtrittsbereich versehene Kastendecke 55. Über den Kastenboden 54 liegt das Teleskopteil T3, T4 auf dem Boden 56 des ersten beziehungsweise zweiten Teleskopteils T1, T2 schiebeverlagerbar auf.

Das Teleskopteil T3, T4 ist anschlagbegrenzt innerhalb des unteren Kammerbereichs 21 in Richtung der Längserstreckung L linear verlagerbar.

Zwischen den Seitenwänden 53 des Teleskopteiles T3, T4 ist eine vierte Band-Umlenkrolle 58 verlagerbar geführt. Die Band-Umlenkrolle 58 kann auf einer Achse 59 drehbar gelagert sein, welche Achse 59 jeweils endseitig in den Seitenwänden 53 befestigt ist.

Mit der Achse 59 können zwei in Längserstreckung L verlaufende Führungsstangen 60 verbunden sein, die eine quer zu der Längserstreckung L verlaufende Befestigungsachse 62 des Teleskopteils T3, T4 durchsetzen. Die Befestigungsachse 62 ist an einem dem zugeordneten Klemmstück 49 beziehungsweise 50 zugewandten Ende des Teleskopteils T3, T4 vorgesehen. Die Befestigungsachse 62 ragt durch eine in Richtung der Längserstreckung L verlaufende Schlitzausnehmung 63 in den Seitenwänden 53 der dritten oder vierten Teleskopteile T3, T4 und sind jeweils endseitig, beispielsweise mittels Schrauben 64, im Bereich der Seitenwandung 33 des ersten oder zweiten Teleskopteils T1, T2 befestigt.

Die Führungsstangen 60 können über das durch die Befestigungsachse 62 definierte Ende des dritten oder vierten Teleskopteils T3, T4 hinausragen und im Bereich ihrer freien Enden eine Anschlagschulter 66 ausformen. Eine jeweils den Bereich zwischen der Befestigungsachse 62 und der vierten Band-Umlenkrolle 58 die Führungsstange 60 umgebende Feder 67 - auch hier beispielsweise in Form einer Zylinder-Druckfeder - kann sich jeweils endseitig an der Befestigungsachse 62 und an der vierten Band-Umlenkrolle 58 abstützen und belastet so die Befestigungsachse 62 in Richtung einer Anschlagstellung an dem dem jeweiligen Klemmstück 49, 50 zugewandten Ende der Schlitzausnehmung 63.

Die vorbeschriebenen Merkmale und Ausgestaltungen bezüglich der ersten Klemmaufnahme 7 hinsichtlich der ersten und dritten Teleskopteile T1 und T3 sowie deren ersten und dritten Klemmstücke 11 und 49, wie auch der ersten und zweiten Umlenkvorrichtungen 23 und 39, weiter auch hinsichtlich der jeweiligen Anordnung und Zuordnung, gelten in gleicher Weise, jedoch relativ zu der Mittelebene M gespiegelt, für die zweite Klemmaufnahme 8 hinsichtlich deren zweiten und vierten Teleskopteile T2 und T4 sowie deren zweiten und vierten Klemmstücke 12 und 50, wie auch der hier vorgesehenen ersten und zweiten Umlenkvorrichtungen 23 und 39.

Der in dem Mittenbereich 14 angeordnete Klemmhebel 13 ist Teil eines Ratschengetriebes R, das im Wesentlichen aus einem starr in dem Grundgehäuse G montierten Spannrahmen 68, einer an dem Spannrahmen 68 um eine quer zu der Richtung der Längserstreckung L ausgerichteten Achse 79 drehbaren Schlitzwelle 69 zum Spannen eines gurtartigen Bandes 70 und dem Klemmhebel 13 besteht.

Die Schlitzwelle 69 ist, in Achsrichtung betrachtet, beidseitig mit einem Sperrrad 72 drehgekoppelt. An dem Klemmhebel 13 ist eine erste Sperrklinke 71 linear verlagerbar gehaltert. Diese greift unter Beaufschlagung einer sich an dem Klemmhebel 13 abstützenden Feder 74 in die Verzahnung des Sperrrades 72 und sperrt die relative Drehbeweglichkeit des Klemmhebels 13 gegenüber der Schlitzwelle 69 in eine Spann-Drehrichtung p.

An dem Spannrahmen 68 ist eine zweite Sperrklinke 73 in Richtung auf die Verzahnung des Sperrrades 72 verschiebbar gelagert. Die zweite Sperrklinke 73 ist in Richtung auf die Eingriffsstellung über eine weitere Feder 75 beaufschlagt. Über die zweite Sperrklinke 73 ist die Drehbeweglichkeit der Schlitzwelle 69 gegenüber dem Spannrahmen 68 entgegen der Spann-Drehrichtung p des Klemmhebels 13 gesperrt.

Der im Wesentlichen U-förmig gestaltete Klemmhebel 13 ist im Bereich der freien Enden der Hebelschenkel 76 um die Schlitzwelle 69 beziehungsweise um die die Schlitzwelle 69 tragende Achse 79 schwenkbar an dem Spannrahmen 68 gehaltert. Der U-Steg bildet den Handgriff 77 des Klemmhebels 13.

Zwischen den Hebelschenkeln 76 ist, von dem Handgriff 77 erreichbar, ein Lösehebel 78 angeordnet, mittels welchem eine Sperre der Schlitzwelle 69 entgegen der Spann-Drehrichtung p zum Lösen der Bandspannung in von üblichen Spanngurt-Systemen bekannter Weise aufgehoben werden kann.

Der Spannrahmen 68 kann in einem Querschnitt, quer zu der Richtung der Längserstreckung L betrachtet, im Wesentlichen U-förmig gestaltet sein, mit zwei parallel zueinander auf Abstand verlaufenden Seitenwänden 80, in welchen die Achse 79 der Schlitzwelle 69 in etwa mittig der Längserstreckung der Seitenwände 80 gehaltert ist.

Weiter kann die Achse 79 der Schlitzwelle 69 mittig durchsetzt sein von der Mittelebene M.

Beidseitig der Mittelebene M gestaltet sich der Spannrahmen 69 - mit Ausnahme des vorbeschriebenen Ratschengetriebes R - spiegelsymmetrisch. So ist zunächst beidseitig der Mittelebene M jeweils eine fünfte Band-Umlenkrolle 81 vorgesehen, die über ihre Achse 82 beidseitig endseitig in den Seitenwänden 80 gehaltert ist.

Darüber hinaus ist beidseitig der Mittelebene M ein Schiebeteil 83 angeordnet. Das Schiebeteil 83 ist in Richtung der Längserstreckung anschlagbegrenzt schiebeverlagerbar zwischen den Seitenwänden 80 geführt.

Das Schiebeteil 80 weist einen plattenförmigen Abschnitt 84 auf, an dessen nach innen in Richtung auf die Mittelebene M weisendem Ende zwei zueinander beabstandete Achsaufnahmen 85 angeordnet sind. Diese sind durchsetzt von einer Achse 86 einer sechsten Band-Umlenkrolle 87, welche Achse 86 jeweils endseitig in eine in Richtung der Längserstreckung L gerichtete Langlochaufnahme 88 der Seitenwände 80 eingreift.

Von dem Abschnitt 84 ausgehend erstreckt sich ein in einem Vertikalschnitt etwa L-förmiger Abschnitt 89, mit einer im Wesentlichen parallel zu dem ersten Abschnitt 84 verlaufenden Indikatorfläche 90. Die Indikatorfläche 90 ist in zwei unterschiedlich gestaltete, beispielsweise mit unterschiedlichen Farben ausgebildete Zonen 90' und 90" unterteilt.

In Längserstreckung L betrachtet beidseitig des Schiebeteils 83 sind innenseitig an den Seitenwänden 80 Führungsrippen 91 für den ersten Abschnitt 84 des Schiebteils 83 ausgebildet. Unterhalb dieser Führungsrippen 91 ist jeweils ein Stützabschnitt 92 angeformt, an welchen sich eine Feder 93 - hier beispielsweise eine Zylinder-Druckfeder - abstützen kann. Abgewandt dem Stützabschnitt 92 wirkt die Feder 93 gegen einen Stützabschnitt 94 des Schiebeteils 83. Die Schiebeteile 83 sind über die Federn 93 in eine Richtung voneinander weg, entsprechend ausgehend von der Mittelebene M in Richtung der zugewandten Enden 5, 6, belastet.

Eine insbesondere zum Einbau des Ratschengetriebes R und des Spannrahmens 68 in dem Grundgehäuse G gegebenenfalls vorgesehene Öffnung kann überdeckt sein von einem eine Schwenköffnung 95 für den Klemmhebel 13 belassenden Rahmen 96. Zur weiteren Abdeckung kann eine Deckplatte 97 vorgesehen sein, die beidseitig zu dem Rand der Schwenköffnung 95 Schlitze zum Durchtritt für die Hebelschenkel 76 belässt.

Die Deckplatte kann mittels Schrauben 98 beispielsweise an dem Spannrahmen 68 befestigt sein. Über beispielsweise Niete 99 kann eine Befestigung des Rahmens 96 an dem Spannrahmen 68 und eine Befestigung des Spannrahmens 68 an dem Grundgehäuse G erreicht sein.

Zur getriebemäßigen Kopplung kann ein Band 70, beispielsweise in Form eines Textilbandes, vorgesehen sein, weiter beispielsweise ein hoch belastbares Polyester-Zurrband. Weiter kann nur ein (Zahlwort) solches Band 70 vorgesehen sein, über welches bevorzugt alle Klemmstücke 11, 12, 49 und 50 des Sperrbalkens 1 unmittelbar oder mittelbar miteinander bewegungsgekoppelt sind.

Das Band 70 durchsetzt den Spannbalken 1 in Richtung dessen Längserstreckung L von einem Ende 5 bis zu dem anderen Ende 6. Dabei umfasst das Band durch eine geschlossene Bandschlaufe 70' die Befestigungsachse 62 des dritten und des vierten Teleskopteils T3 und T4, wonach das Band 70 innerhalb des unteren Kammerbereichs 21 um die vierte Band-Umlenkrolle 58 desselben dritten oder vierten Teleskopteils T3 oder T4 geführt ist. Unter Überführung des Bandes 70 hiernach in den oberen Kammerbereich 20 und Führung um die zweite Band-Umlenkrolle 37 ergibt sich eine weitere Erstreckung des Bandes 70 in dem oberen Kammerbereich 20 bis zu der ersten Umlenkeinrichtung 23 des ersten beziehungsweise zweiten Teleskopteils T1, T2, in welcher das Band 70 unter Führung um die erste Band-Umlenkrolle 27 wieder in Richtung auf den unteren Kammerbereich 21 zurückgeführt wird. Dort ergibt sich eine Führung um die dritte Band-Umlenkrolle 43 von wo aus sich das Band 70 innerhalb des Grundgehäuses G bis zu dem Ratschengetriebe R erstreckt.

In dem Bereich des Spannrahmens 68 umläuft das Band 70 zunächst jeweils die in den Darstellungen obere, sechste Band-Umlenkrolle 87 und anschließend die untere fünfte Band-Umlenkrolle 81, bevor das Band 70, die Schlitzwelle 69 durchsetzend, zu dem anderen Ende 5 oder 6 des Spannbalkens 1 unter Umschlingung der auf diesem Weg vorhandenen Band-Umlenkrollen bis hin zu der dort vorgesehenen Befestigungsachse 62 geführt ist.

Der Klemmhebel 13 ist durch die beschriebene Ausgestaltung getriebemäßig über das einteilige Band 70 sowohl mit dem ersten und dem zweiten Klemmstück 11, 12 wie auch mit dem dritten und vierten Klemmstück 49, 50 gekoppelt, zur Bewegung des ersten und des zweiten Klemmstücks 11, 12 wie auch des dritten und des vierten Klemmstücks 49, 50 mittels einer selben Hebelbewegung insbesondere in eine Klemmstellung.

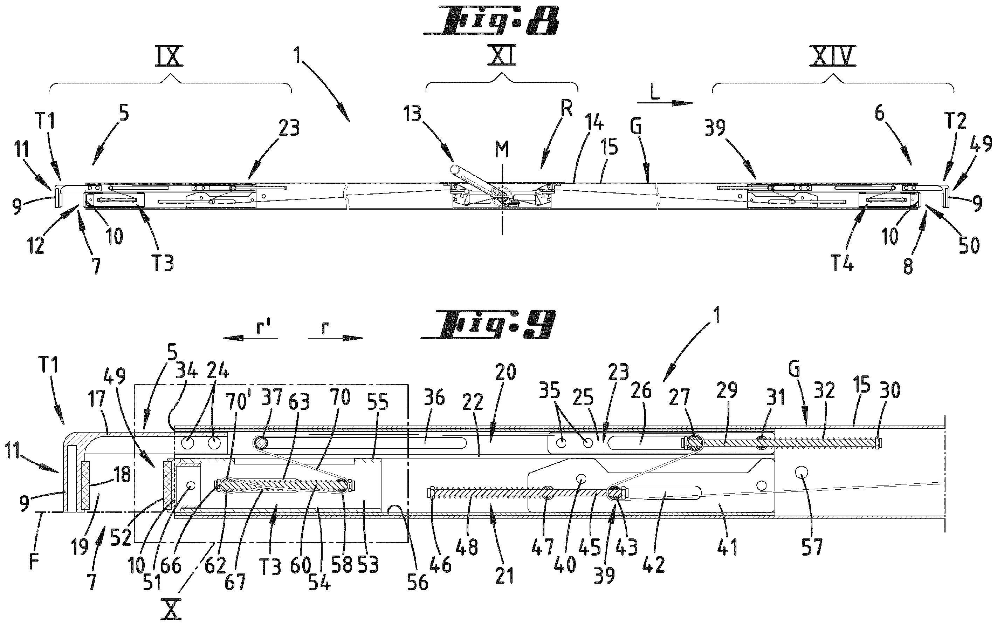

Der in eine Ausziehstellung beispielsweise gemäß den Figuren 8 und 19 verbrachte Sperrbalken 1 wird mit den U-förmigen Klemmaufnahmen 7 und 8 den Querriegeln 16 des Lastkraftwagen-Aufbaus 4 zugeführt, wonach die Klemmaufnahmen 7, 8 mit ihren U-Stegen 17 unter Einfangen der Querriegel 16 in der U-Öffnung 19 auf den Querriegeln 16 aufliegen können (vergleiche Figur 19).

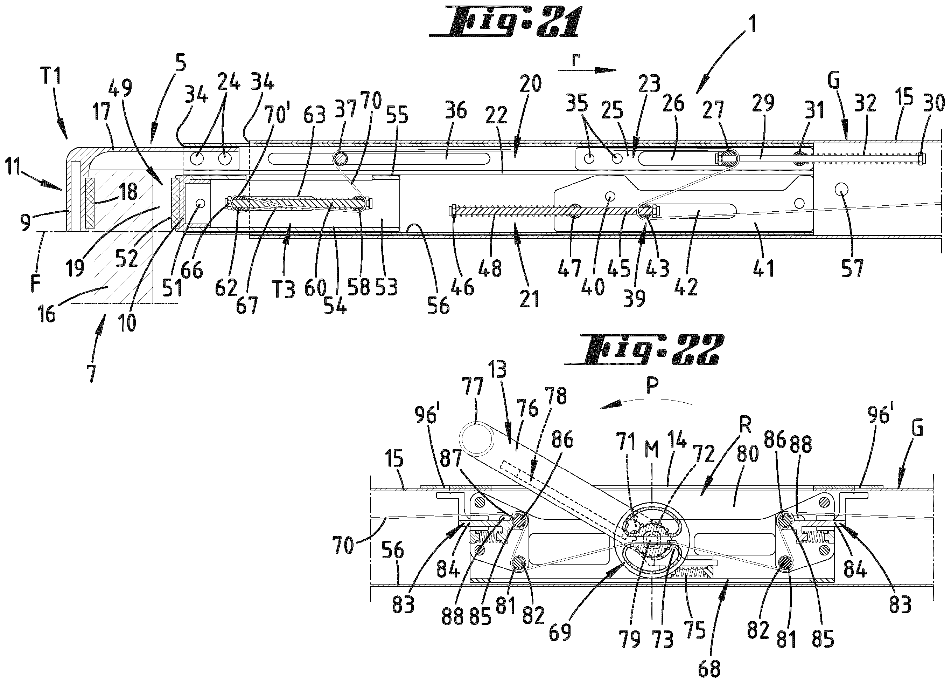

Mittels einer alternierenden Schwenkbewegung des Klemmhebels 13 in Art eines Ratschenhebels um die Achse 79, wobei in der Spann-Drehrichtung p eine Drehmitnahme der Schlitzwelle 69 erreicht wird und in entgegengesetzter Drehrichtung das Sperrrad 72 ratschenartig überlaufen wird, wird das Band 70 sukzessive um die Schlitzwelle 69 gewickelt, so dass sich eine Verringerung der freien Bandlänge insgesamt ergibt. Dabei ergibt sich zunächst eine teleskopartige Bewegung des ersten und des zweite Teleskopteils T1 und T2 innerhalb des Grundgehäuses G in Einziehrichtung r unter entsprechender Mitnahme der ersten und zweiten Klemmstücke 11 und 12 in eine Anlagestellung gemäß Figur 21. Die Einwärtsverlagerung beider Klemmstücke 11 und 12 erfolgt im Wesentlich zugleich.

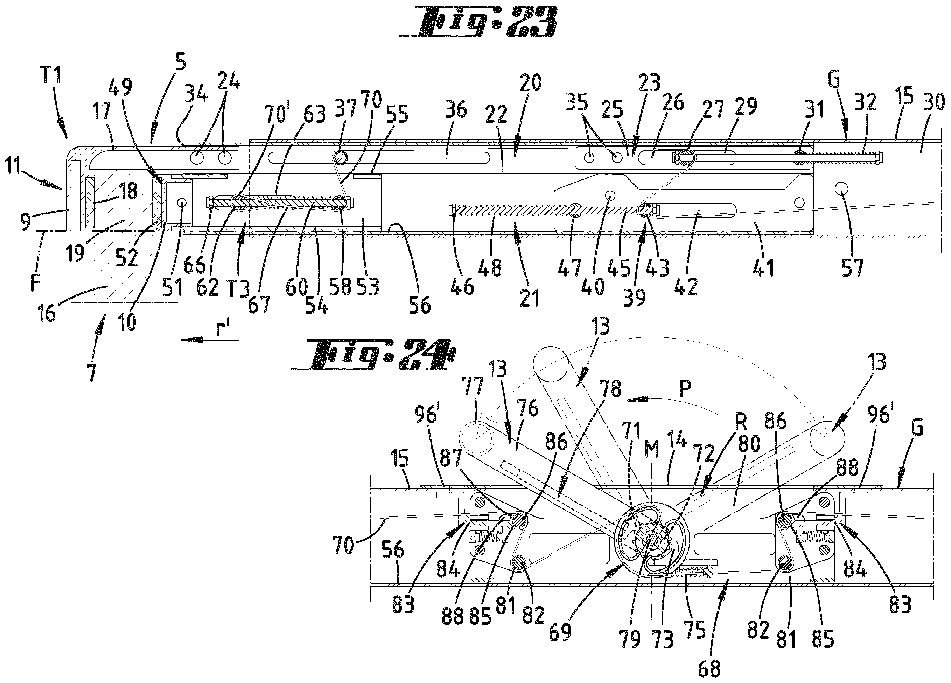

Mit Anlage der ersten und zweiten Klemmstücke 11, 12 an den zugewandten Anlageflächen der Querriegel 16 ist eine Abstützung erreicht, welche bei weiterer ratschenartiger Betätigung des Klemmhebels 13 über die getriebemäßige Umlenkung des Bandes 70, gegebenenfalls unter Aufbau einer Feder-Rückstellspannung, im Bereich insbesondere der Federn 32 und/oder 48 und/oder 67, zu einer Schiebeverlagerung der dritten und vierten Teleskopteile T3 und T4 in Ausziehrichtung r' führt, bis die Klemmflächen 52 der dritten und vierten Klemmstücke 49 und 50 in Anlage treten an die zugewandte Fläche des Querriegels 16 (vergleiche Figur 23).

Eine hiernach weitergeführte Ratschenbewegung des Klemmhebels 13 führt zu einer ordnungsgemäßen Verspannung des Systems (vergleiche Figur 25) unter weiterer Spannung der Feder 32 und/oder 48 und/oder 67.

Die auf das Band 70 einwirkende Kraft führt mit Erreichen der vorgegebenen Verspannkraft zu einer Verlagerung bevorzugt beider Schiebeteile 83 innerhalb des Spannrahmens 68 entgegen der Rückstellkraft der Federn 93, sodass in dieser Stellung die Indikatorfläche 90 mit der Zone 90' ein in dem Rahmen 96 vorgesehenes Fenster 96' erreicht. Eine beispielsweise grün gefärbte Fläche der Zone 90' kann das korrekte Verspannen des Sperrbalkens 1 anzeigen. Ist hingegen die Verspannung nicht ausreichend, ergibt sich keine Verlagerung der Schiebeteile 83 und es zeigt sich in dem Fenster 96' die Zone 90" der Indikatorfläche 90, welche beispielsweise mit der Signalfarbe rot versehen sein kann.

Zufolge der konvexen Krümmung der Klemmflächen 18 und 52 der ersten, zweiten, dritten und vierten Klemmstücke 11, 12, 49 und 50 ist eine vereinfachte Handhabung des Sperrbalkens 1 erreichbar. Der Sperrbalken 1 ist nicht zwingend in eine Richtung senkrecht zu beispielsweise dem Querriegel 16, an welchem die Klemmaufnahmen 7 und 8 klemmend angreifen, auszurichten. Vielmehr kann zufolge der gekrümmten Klemmflächen 18 und 52 der Sperrbalken 1 auch in einem spitzen Winkel α von beispielsweise bis hin zu 20 Grad zu einer Senkrechten auf die Querriegel-Anlagefläche 16', an welcher die Klemmflächen 18 oder 52 anliegt, ausgerichtet und in dieser Stellung durch Klemmung befestigt werden. Durch die aufeinander zu gerichteten balligen Klemmflächen 18 und 52 ist stets eine sichere Klemmung des Sperrbalkens 1 erreichbar.

In der in den Figuren 31 bis 45 dargestellten zweiten Ausführungsform sind im Wesentlichen die vorbeschriebene erste Umlenkeinrichtung 23 und die zweite Umlenkeinrichtung 39 des ersten beziehungsweise zweite Teleskopteils T1, T2 ersetzt durch ein erstes beziehungsweise zweites Schlittenteil S1, S2. Die Schlittenteile S1 und S2 können gleichgestaltet ausgebildet sein.

Jedes Schlittenteil S1, S2 ist in dem Grundgehäuse G zwischen dem zugeordneten ersten beziehungsweise zweiten Teleskopteil T1, T2 und dem Ratschengetriebe R aufgenommen. Dabei ist weiter jedes Schlittenteil S1, S2 in Richtung der Längserstreckung L frei in dem Grundgehäuse G schiebeverlagerbar.

Dabei weist jedes Schlittenteil S1, S2 zunächst zwei quer zu der Längserstreckung L zueinander beabstandete Schlittenwände 100 auf. Das Beanstandungsmaß der Schlittenwände 100 zueinander wie auch ein senkrecht zu der Längserstreckung L betrachtetes Höhenmaß der Schlittenwände 100 sind angepasst an die in selber Richtung betrachteten inneren lichten Maße des Grundteils 15, so dass die Schlittenteile S1, S2 gegen ein Verkippen gesichert innerhalb des Grundteils 15 verschiebbar sind.

Die Schlittenwände 100 sind zumindest über eine Befestigungsachse 101 und eine Umlenkachse 102 miteinander verbunden. Die Befestigung der Befestigungsachse 101 und der Umlenkachse 102 an den Schlittenwänden 100 erfolgt bevorzugt mittels Schrauben 103, die entsprechend positionierte Bohrungen 104 in den Schlittenwänden 100 durchsetzen.

Die dem Ratschengetriebe R zugewandte Befestigungsachse 101 des ersten Schlittenteils S1 ist umfasst von einer Bandschlaufe 70' des durch die Schlitzwelle 69 des Ratschengetriebes R bis hin zu der Befestigungsachse 101 des zweiten Schlittenteils S2 geführten Bands 70, an welcher Befestigungsachse 101 des zweiten Schlittenteils S2 das Band 70 wiederrum mit einer Bandschlaufe 70' angreift.

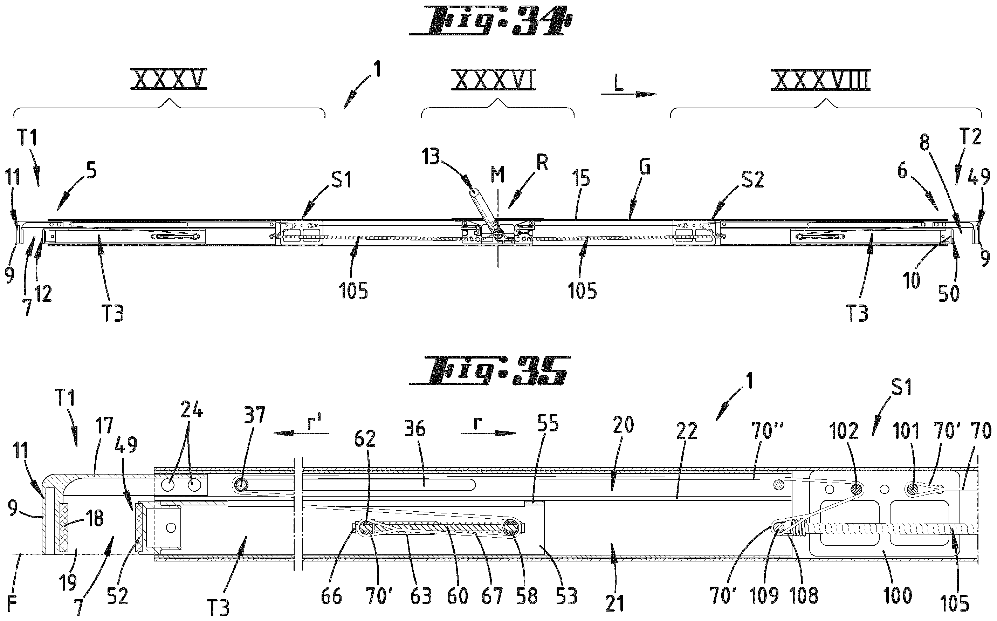

Ausgehend von einer Grundstellung, beispielsweise gemäß Figur 34, werden durch eine ratschenartige Betätigung des Klemmhebels 13 über die getriebemäßige Umlenkung des Bandes 70 im Bereich der Schlitzwelle 69 beide Schlittenteile S1 und S2 gleichermaßen in Richtung auf das Ratschengetriebe R gezogen.

Die ersten und zweiten Teleskopteile T1 und T2 - und über diese auch die dritten und vierten Teleskopteile T3 und T4 - sind in der beschriebenen zweiten Ausführungsform von der unmittelbaren Einwirkung über das Ratschengetriebe R entkoppelt. Vielmehr ergibt sich eine mittelbare Wirkung des Ratschengetriebes R auf die Teleskopteile T1 und T2 unter Zwischenschaltung der Schlittenteile S1 und S2.

Hierzu ist das erste beziehungsweise das zweite Teleskopteil T1, T2 über ein gesondertes Band 70" mit dem zugeordneten ersten beziehungsweise zweiten Schlittenteil S1, S2 gekoppelt.

Das gesonderte Band 70" ist dabei in einem dem Ratschengetriebe R zugewandten Endabschnitt mittels einer Bandschlaufe 70' an einer Befestigungsachse 109 des Teleskopteils T1, T2 angebunden und von dieser Befestigungsachse 109 ausgehend um die Umlenkachse 102 des Schlittenteils S1, S2 geführt. Die Befestigungsachse 109 kann in einem dem Ratschengetriebe R zugewandten Endbereich des Teleskopteils T1, T2 befestigt sein.

In weiterer Erstreckung des gesonderten Bandes 70" wird dieses nach der Führung um die Umlenkachse 102 durch den oberen Kammerbereich 20 geleitet. Unter weiterer Umlenkung um die zweite Band-Umlenkrolle 37 des Teleskopteils T1, T2 ist das gesonderte Band 70" anschließend auch in dieser Ausführungsform wieder in Richtung auf den unteren Kammerbereich 21 zurückgeführt.

Innerhalb des unteren Kammerbereichs 21 ist das gesonderte Band 70" um die vierte Band-Umlenkrolle 58 des dritten beziehungsweise vierten Teleskopteils T3 oder T4 gelenkt. Das freie Ende des gesonderten Bandes 70" umfasst mit einer geschlossenen Bandschlaufe 70' die über die Feder 67 abgestützte Befestigungsachse 62 des dritten beziehungsweise vierten Teleskopteils T3 und T4.

Das erste und das zweite Teleskopteil T1 und T2 sind in weiter bevorzugter Ausgestaltung in Richtung auf eine Teleskop-Einzugsstellung gemäß den Figuren 34 bis 39, welche Teleskop-Einzugsstellung weiter bevorzugt der Grundstellung des Sperrbalkens 1 entspricht, federbelastet.

Hierzu kann ein expanderartiges Federelement 105, weiter beispielsweise eine Zugfeder oder ein Expanderseil, im Bereich eines beispielsweise hakenförmigen Endes 107 an dem Grundgehäuse 15 verankert sein. Weiter beispielsweise kann dieses Ende 107 an einem in den Seitenwänden 80 des Spannrahmens 68 gehalterten Bolzen 106 angreifen.

Das diesem Ende 107 abgewandte, weiter beispielsweise ebenfalls hakenförmige Ende 108 des Federelements 105 greift an der - in dem dargestellten Ausführungsbeispiel auch der Halterung der Bandschlaufe 70' des gesonderten Bandes 70" dienenden - Befestigungsachse 109 des ersten beziehungsweise zweiten Teleskopteils T1, T2 an.

Das Federelement 105 wirkt derart auf das Teleskopteil ein, dass eine Verlagerung der Teleskopteile T1, T2 in Richtung auf eine Teleskop-Auszugstellung, beispielsweise im Zuge eines Ansetzens des Sperrbalkens 1, nur unter Überwindung der Rückstellkraft des Federelements 105 erreichbar ist.

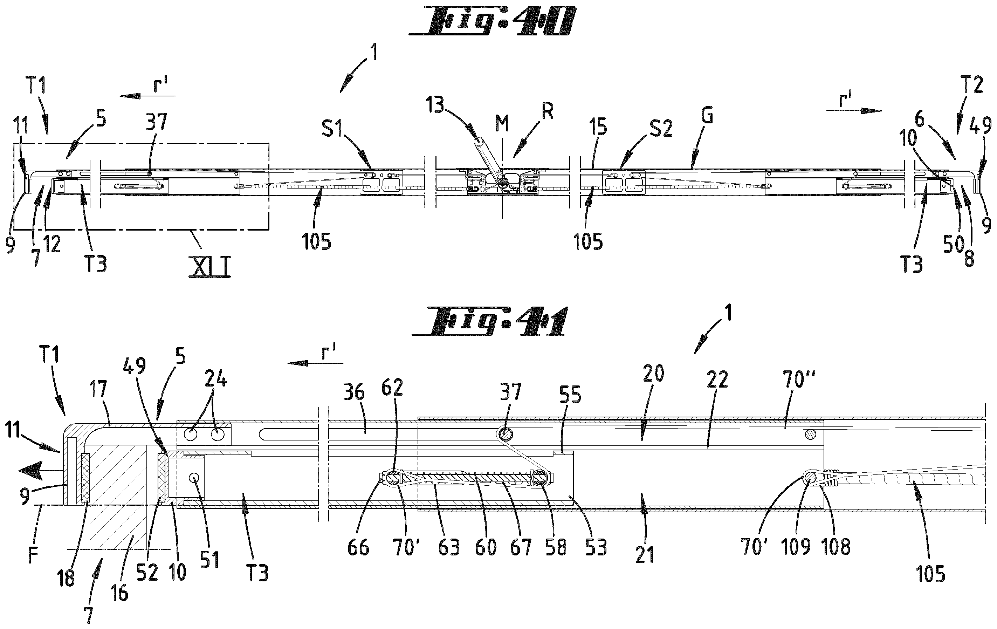

Der in eine Ausziehstellung beispielsweise gemäß den Figuren 40 und 41 verbrachte Sperrbalken 1 wird mit den U-förmigen Klemmaufnahmen 7 und 8 den Querriegeln 16 des Lastkraftwagen-Aufbaus 4 zugeführt, wonach die Klemmaufnahmen 7, 8 mit ihren U-Stegen 17 unter Einfangen der Querriegel 16 in der U-Öffnung 19 auf den Querriegeln 16 aufliegen können (vergleiche Figur 41).

Nach Zuführung der U-förmigen Klemmaufnahmen 7 und 8 an die Querriegel 16 und mittels der Federelemente 105 unterstützter Anlage kann mittels einer alternierenden Schwenkbewegung des Klemmhebels 13 um die Achse 79 eine Drehmitnahme der Schlitzwelle 69 erreicht werden, wobei das Band 70 sukzessive um die Schlitzwelle 69 gewickelt wird und sich so eine Verringerung der freien Länge des Bandes 70 insgesamt ergibt. Dies führt zunächst zu einer Schiebeverlagerung der Schlittenteile S1 und S2 nach innen in Richtung auf das Ratschengetriebe R.

Über die Umlenkachsen 102 der Schlittenteile S1 und S2 wird im Zuge deren Schiebeverlagerung auf die gesonderten Bänder 70" derart eingewirkt, dass eine teleskopartige Bewegung des ersten und des zweite Teleskopteils T1 und T2 innerhalb des Grundgehäuses G in Einziehrichtung r unter entsprechender Mitnahme der ersten und zweiten Klemmstücke 11 und 12 in die Anlagestellung gemäß Figur 41 unterstützt wird.

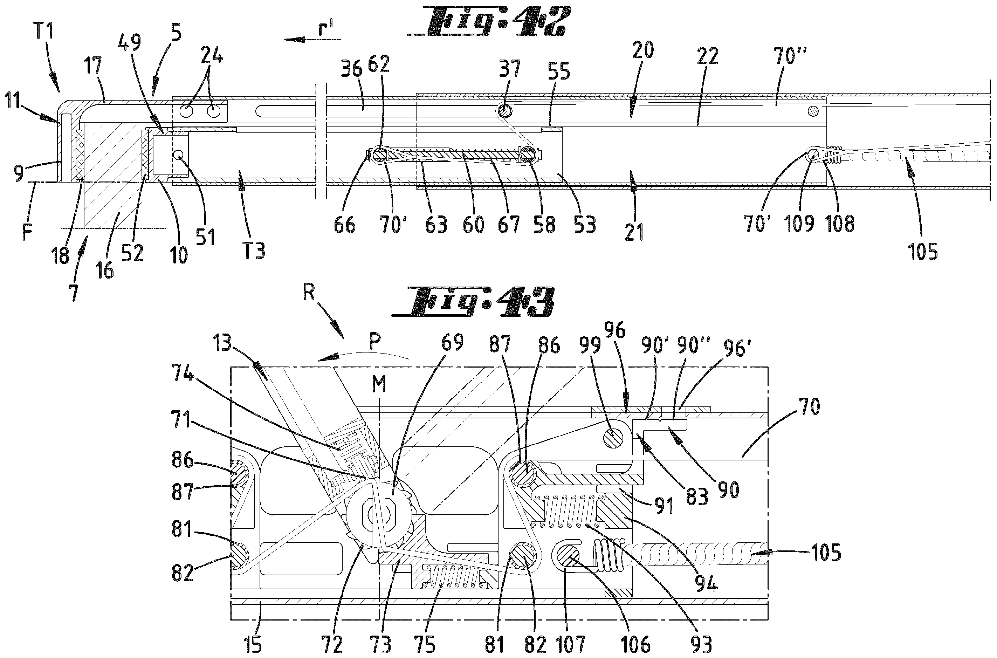

Mit Anlage der ersten und zweiten Klemmstücke 11, 12 an den zugewandten Anlageflächen der Querriegel 16 ist eine Abstützung erreicht, welche bei weiterer ratschenartiger Betätigung des Klemmhebels 13 über die getriebemäßige Umlenkung des gesonderten Bandes 70"zu einer Schiebeverlagerung der dritten und vierten Teleskopteile T3 und T4 in Ausziehrichtung r' führt, bis die Klemmflächen 52 der dritten und vierten Klemmstücke 49 und 50 in Anlage treten an die zugewandte Fläche des Querriegels 16 (vergleiche Figur 42).

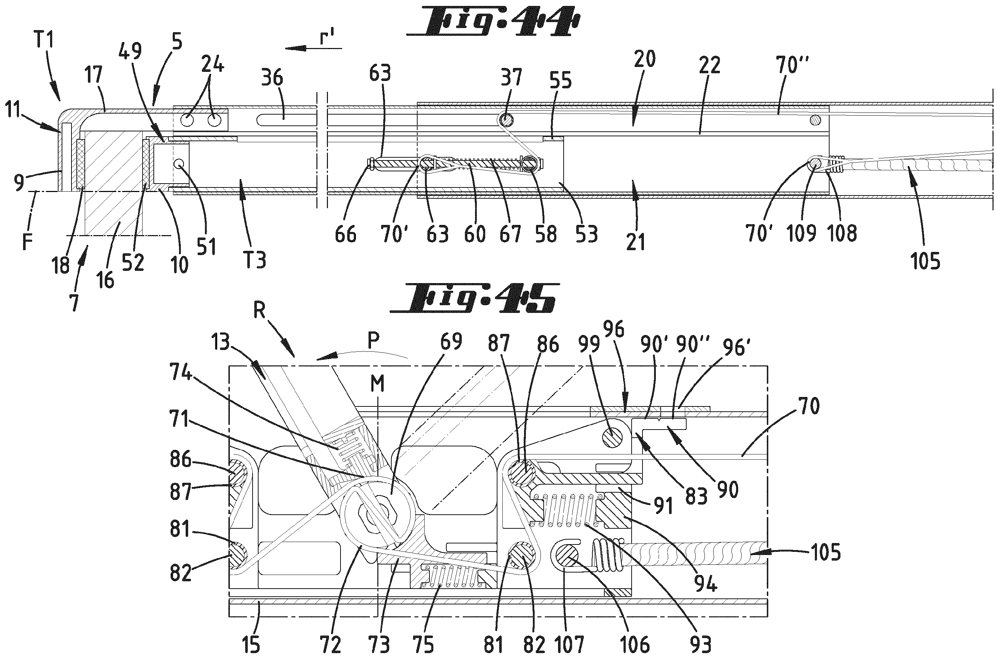

Eine hiernach weitergeführte Ratschenbewegung des Klemmhebels 13 führt zu einer ordnungsgemäßen Verspannung des Systems (vergleiche Figur 44) unter weiterer Spannung der Feder 67, wobei mit Erreichen der vorgegebenen Verspannkraft die Indikatorfläche 90 mit der Zone 90' das in dem Rahmen 96 vorgesehene Fenster 96' erreicht und die ordnungsgemäße Verspannung anzeigt.

Zufolge einer oder mehrerer der vorgeschlagenen Ausgestaltungen ist eine handhabungstechnisch vereinfachte Handhabung des Sperrbalkens 1 erreichbar. Die den Sperrbalken 1 in die Klemmstellung oder aus der Klemmstellung in die Freigabestellung beider Klemmaufnahmen 7 und 8 zu verbringende Person braucht zur Betätigung der Klemmstücke 11, 12, 49 und 50 lediglich den einen, bevorzugt mittig angeordneten Klemmhebel 13 betätigen. Mit Betätigung dieses einen Klemmhebels 13 werden durch die getriebemäßige Kopplung die Klemmstücke 11, 12, 49 und 50 beider Klemmaufnahmen 7 und 8 insbesondere aus der Freigabestellung in die Klemmstellung bewegt.

Alle offenbarten Merkmale sind (für sich, aber auch in Kombination untereinander) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen. Die Unteransprüche charakterisieren, auch ohne die Merkmale eines in Bezug genommenen Anspruchs, mit ihren Merkmalen eigenständige erfinderische Weiterbildungen des Standes der Technik, insbesondere um auf Basis dieser Ansprüche Teilanmeldungen vorzunehmen. Die in jedem Anspruch angegebene Erfindung kann zusätzlich ein oder mehrere der in der vorstehenden Beschreibung, insbesondere mit Bezugsziffern versehene und/oder in der Bezugsziffernliste angegebene Merkmale aufweisen. Die Erfindung betrifft auch Gestaltungsformen, bei denen einzelne der in der vorstehenden Beschreibung genannten Merkmale nicht verwirklicht sind, insbesondere soweit sie erkennbar für den jeweiligen Verwendungszweck entbehrlich sind oder durch andere technisch gleichwirkende Mittel ersetzt werden können.

**Liste der Bezugszeichen**

| | | | |
|---|---|---|---|
| 1 | Sperrbalken | 28 | Achse |
| 2 | Ladung | 29 | Führungsstange |
| 3 | Ladefläche | 30 | Abstützsteg |
| 4 | Lastkraftwagen-Aufbau | 31 | Anschlagschulter |
| 5 | Ende | 32 | Feder |
| 6 | Ende | 33 | Seitenwand |
| 7 | erste Klemmaufnahme | 34 | Stirnfläche |
| 8 | zweite Klemmaufnahme | 35 | Niet |
| 9 | erster U-Schenkel | 36 | Langloch |
| 10 | zweiter U-Schenkel | 37 | zweite Band-Umlenkrolle |
| 11 | erstes Klemmstück | 38 | Achse |
| 12 | zweites Klemmstück | 39 | zweite Umlenkvorrichtung |
| 13 | Klemmhebel | 40 | Niet |
| 14 | Mittenbereich | 41 | Seitenwand |
| 15 | Grundteil | 42 | Schlitzausnehmung |
| 16 | Querriegel | 43 | dritte Band-Umlenkrolle |
| 16' | Querriegel-Anlagefläche | 44 | Achse |
| 17 | U-Steg | 45 | Führungsstange |
| 18 | Klemmfläche | 46 | Abstützsteg |
| 19 | U-Öffnung | 47 | Anschlagschulter |
| 20 | oberer Kammerbereich | 48 | Feder |
| 21 | unterer Kammerbereich | 49 | drittes Klemmstück |
| 22 | Vorsprung | 50 | viertes Klemmstück |
| 23 | erste Umlenkvorrichtung | 51 | Niet |
| 24 | Niet | 52 | Klemmfläche |
| 25 | Seitenwand | 53 | Seitenwand |
| 26 | Schlitzausnehmung | 54 | Kastenboden |
| 27 | erste Band-Umlenkrolle | 55 | Kastendecke |
| 56 | Boden | 84 | Abschnitt |
| 57 | Anschlagstift | 85 | Achsaufnahme |
| 58 | vierte Band-Umlenkrolle | 86 | Achse |
| 59 | Achse | 87 | sechste Band-Umlenkrolle |
| 60 | Führungsstange | 88 | Langlochaufnahme |
| 61 | --- | 89 | Abschnitt |
| 62 | Befestigungsachse | 90 | Indikatorfläche |
| 63 | Schlitzausnehmung | 90' | Zone |
| 64 | Schraube | 90" | Zone |
| 65 | Seitenwandung | 91 | Führungsrippe |
| 66 | Anschlagschulter | 92 | Stützabschnitt |
| 67 | Feder | 93 | Feder |
| 68 | Spannrahmen | 94 | Stützabschnitt |
| 69 | Schlitzwelle | 95 | Schwenköffnung |
| 70 | Band | 96 | Rahmen |
| 70' | Bandschlaufe | 96' | Fenster |
| 70" | gesondertes Band | 97 | Deckplatte |
| 71 | erste Sperrklinke | 98 | Schraube |
| 72 | Sperrrad | 99 | Niet |
| 73 | zweite Sperrklinke | 100 | Schlittenwand |
| 74 | Feder | 101 | Befestigungsachse |
| 75 | Feder | 102 | Umlenkachse |
| 76 | Hebelschenkel | 103 | Schraube |
| 77 | Handgriff | 104 | Bohrung |
| 78 | Lösehebel | 105 | Federelement |
| 79 | Achse | 106 | Bolzen |
| 80 | Seitenwand | 107 | Ende |
| 81 | fünfte Band-Umlenkrolle | 108 | Ende |
| 82 | Achse | 109 | Befestigungsachse |
| 83 | Schiebeteil | | |
| α | | Winkel | |
| b | | Radiusmaß | |
| c | | Breitenmaß | |
| p | | Spann-Drehrichtung | |
| r | | Einziehrichtung | |
| r' | | Ausziehrichtung | |
| F | | Öffnungsebene | |
| G | | Grundgehäuse | |
| L | | Längserstreckung | |
| M | | Mittelebene | |
| R | | Ratschengetriebe | |
| S1 | | erstes Schlittenteil | |
| S2 | | zweites Schlittenteil | |
| T1 | | erstes Teleskopteil | |
| T2 | | zweites Teleskopteil | |
| T3 | | drittes Teleskopteil | |
| T4 | | viertes Teleskopteil | |

## Patentansprüche

1. Sperrbalken (1) zur Ladungssicherung, mit an gegenüberliegenden Enden (5, 6) ausgebildeten, im Wesentlichen U-förmigen Klemmaufnahmen, einer ersten Klemmaufnahme (7) und einer zweiten Klemmaufnahme (8), wobei die erste Klemmaufnahme (7) ein erstes, einem U-Schenkel (9) entsprechendes Klemmstück (11) und die zweite Klemmaufnahme (8) ein zweites, einem U-Schenkel (9) entsprechendes Klemmstück (12) aufweist und das erste und das zweite Klemmstück (11, 12) zwischen einer Klemmstellung und einer Freigabestellung mittels eines Klemmhebels (13) bewegbar sind, **dadurch gekennzeichnet, dass** der Klemmhebel (13) getriebemäßig mit dem ersten und dem zweiten Klemmstück (11, 12) gekoppelt ist, zur Bewegung des ersten und des zweiten Klemmstücks (11, 12) mittels einer selben Hebelbewegung in die Klemmstellung.

2. Sperrbalken nach Anspruch 1, **dadurch gekennzeichnet, dass** die erste und/oder die zweite Klemmaufnahme (7, 8) ein drittes und/oder ein viertes Klemmstück (49, 50) aufweisen, die auch jeweils einem U-Schenkel (10) entsprechen.

3. Sperrbalken nach einem der vorhergehenden Ansprüche, **dadurch gekennzeichnet, dass** der Sperrbalken (1) ein Grundteil (15) und ein oder mehrere relativ zu dem Grundteil (15) in eine Auszieh- oder Einziehstellung bewegbare Teleskopteile (T1, T2, T3, T4) aufweist.

4. Sperrbalken nach Anspruch 3, **dadurch gekennzeichnet, dass** das erste und/oder das zweite Klemmstück (11, 12) an einem ersten beziehungsweise einem zweiten Teleskopteil (T1, T2) angeordnet sind.

5. Sperrbalken nach einem der Ansprüche 3 oder 4, **dadurch gekennzeichnet, dass** die Bewegung des ersten und/oder des zweiten Klemmstücks (11, 12) in die Klemmstellung das erste und/oder das zweite Teleskopteil (T1, T2) in die Einziehstellung bewegt.

6. Sperrbalken nach einem der Ansprüche 2 bis 5, **dadurch gekennzeichnet, dass** das dritte und/oder das vierte Klemmstück (49, 50) an einem dritten beziehungsweise einem vierten Teleskopteil (T3, T4) angeordnet sind.

7. Sperrbalken nach Anspruch 6, **dadurch gekennzeichnet, dass** eine Bewegung des dritten und/oder des vierten Klemmstücks (49, 50) in die Klemmstellung das dritte und/oder das vierte Teleskopteil (T3, T4) in die Ausziehstellung bewegt.

8. Sperrbalken nach einem der vorhergehenden Ansprüche, **dadurch gekennzeichnet, dass** die getriebemäßige Kopplung mittels Zahnstangen und Ritzel oder eines Seilzugs oder einer Kette oder eines Bandes (70) erreicht ist.

9. Sperrbalken nach einem der Ansprüche 3 bis 8, **dadurch gekennzeichnet, dass** ein Teleskopteil (T1, T2, T3, T4) gegen Federkraft verschiebbar ist.

10. Sperrbalken nach einem der Ansprüche 3 bis 9, **dadurch gekennzeichnet, dass** der Sperrbalken (1) ein Grundgehäuse (G) aufweist und dass das erste und zweite Teleskopteil (T1, T2) und/oder das dritte und vierte Teleskopteil (T3, T4) innerhalb des Grundgehäuses (G) angeordnet sind.

11. Sperrbalken nach einem der Ansprüche 6 bis 10, **dadurch gekennzeichnet, dass** das erste und dritte Teleskopteil (T1, T3) und/oder das zweite und vierte Teleskopteil (T2, T4) in dem Grundgehäuse (G) übereinander angeordnet sind.

12. Sperrbalken nach einem der Ansprüche 10 oder 11, **dadurch gekennzeichnet, dass** in dem Grundgehäuse (G) schienenartige Vorsprünge (22) ausgebildet sind, zur gesonderten Führung des ersten, zweiten, dritten und vierten Teleskopteils (T1, T2, T3, T4).

13. Sperrbalken nach einem der Ansprüche 10 bis 12, **dadurch gekennzeichnet, dass** in dem Grundgehäuse (G) zugeordnet dem ersten Teleskopteil (T1) ein erstes Schlittenteil (S1) und zugeordnet dem zweiten Teleskopteil (T2) ein zweites Schlittenteil (S2) angeordnet ist, und/oder, dass das erste Schlittenteil (S1) relativ zu dem ersten Teleskopteil (T1) und das zweite Schlittenteil (S2) relativ zu dem zweiten Teleskopteil (T2) in dem Grundgehäuse (G) verschiebbar aufgenommen ist.

14. Sperrbalken nach einem der Ansprüche 3 bis 13, **dadurch gekennzeichnet, dass** das erste und/oder das zweite Teleskopteil (T1, T2) mittels Federkraft in Richtung auf eine Teleskop-Einzugstellung belastet ist.

15. Sperrbalken nach den Merkmalen des Oberbegriffs des Anspruchs 1 oder nach einem der vorhergehenden Ansprüche, **dadurch gekennzeichnet, dass** in einem Querschnitt durch eine Klemmfläche (18, 52) parallel zu einer Öffnungsebene (F) der Klemmaufnahme (7, 8) die Klemmfläche (18, 52) des ersten und/oder zweiten und/oder eines dritten und/oder eines vierten Klemmstücks (11, 12, 49, 50) in Richtung auf eine gegenüberliegende Klemmfläche (52, 18) derselben Klemmaufnahme (8, 7) konvex gekrümmt verläuft.
